# EUROPEAN PATENT APPLICATION

(11) **EP 4 722 012 A1**
(43) Date of publication of application: **08.04.2026**
(21) Application number: 24830351.3
(22) Date of filing: 28.05.2024
(51) Int. Cl.: B60K 11/02, F16H 57/04, B60K 1/00, B60K 17/04, B60R 17/00, H02K 9/19, H02K 5/20

(54) **OIL-COOLED POWERTRAIN AND ELECTRIC VEHICLE**

(30) Priority: 30.06.2023 CN 202310803433
(71) Applicant: Huawei Digital Power Technologies Co., Ltd., Shenzhen, Guangdong 518043 (CN)
(72) Inventor: HUANGFU, Yuzhao, Shenzhen, Guangdong 518043 (CN); CHEN, Fei, Shenzhen, Guangdong 518043 (CN); LIU, Hongbing, Shenzhen, Guangdong 518043 (CN)
(74) Representative: Maiwald GmbH
(86) International application number: PCT/CN2024/095823
(87) International publication number: WO 2025/001703

(57) **Abstract**

This application provides an oil-cooled powertrain and an electric vehicle. The oil-cooled powertrain includes a reducer, a motor, and an oil through pipe. The reducer includes a reducer input shaft. The motor includes a motor shaft. The reducer input shaft is fastened to the motor shaft, and the motor shaft is configured to transmit power to the reducer input shaft. The reducer input shaft includes a reducer shaft cavity. The reducer shaft cavity is configured to accommodate the oil through pipe and a part of the motor shaft. The oil through pipe and the reducer input shaft are oppositely fastened. The motor shaft includes a motor shaft cavity. The oil through pipe is configured to convey cooling oil to the motor shaft cavity. In an axial direction of the motor, the reducer shaft cavity penetrates the reducer input shaft, and the motor shaft cavity penetrates the motor shaft. The oil through pipe and the motor shaft are arranged in the axial direction of the motor, and the oil through pipe communicates with the motor shaft cavity. In this application, the oil through pipe is disposed in the reducer shaft cavity, to convey the cooling oil from the reducer to the motor. This expands coverage of the cooling oil in the oil-cooled powertrain, and helps improve cooling efficiency.

## Description

This application claims priority to Chinese Patent Application No. 202310803433.X, filed with the China National Intellectual Property Administration on June 30, 2023 and entitled "OIL-COOLED POWERTRAIN AND ELECTRIC VEHICLE", which is incorporated herein by reference in its entirety.

### TECHNICAL FIELD

This application relates to the field of oil-cooled powertrain technologies, and in particular, to an oil-cooled powertrain and an electric vehicle.

### BACKGROUND

Existing electric vehicles usually use integrated powertrains as power sources. Currently, a motor and a motor control unit are usually integrated into a two-in-one powertrain, or a motor, a motor control unit, and a reducer are usually integrated into a three-in-one powertrain, or a motor, a motor control unit, a reducer, and another component of an electric vehicle are usually integrated into an all-in-one powertrain. To improve overall performance of the electric vehicle, it is necessary to comprehensively consider a plurality of design requirements such as miniaturization, power density, reliability, heat dissipation performance, and power performance of the powertrain. The powertrain generates much heat during operation. This affects a service life and stability of the powertrain. To reduce a temperature of the powertrain in an operating state, cooling oil is usually supplied to the powertrain. However, currently the cooling oil in the powertrain has small coverage, resulting in poor overall cooling effect on the powertrain.

### SUMMARY

This application provides an electric vehicle and an oil-cooled powertrain in which oil is fed into a shaft.

According to a first aspect, an embodiment of this application provides an oil-cooled powertrain, including a reducer, a motor, and an oil through pipe. The reducer includes a reducer input shaft, the motor includes a motor shaft, the reducer input shaft is fastened to the motor shaft, the reducer input shaft includes a reducer shaft cavity, the reducer shaft cavity is configured to accommodate the oil through pipe and a part of the motor shaft, the oil through pipe and the reducer input shaft are oppositely fastened, and the motor shaft includes a motor shaft cavity. In an axial direction of the motor, the reducer shaft cavity penetrates the reducer input shaft, and the motor shaft cavity penetrates the motor shaft. The oil through pipe and the motor shaft are arranged in the axial direction of the motor, and the oil through pipe communicates with the motor shaft cavity.

In this embodiment of this application, the oil through pipe is disposed in the reducer shaft cavity, and the oil through pipe communicates with the motor shaft cavity, so that cooling oil can be accurately guided from the reducer shaft cavity to the motor shaft cavity, to provide a basis for subsequently cooling an internal structure of the motor. The oil through pipe and the reducer input shaft are oppositely fastened. When the reducer input shaft rotates at a high speed, the oil through pipe can stably transmit the cooling oil. This helps meet a cooling requirement of the oil-cooled powertrain in a high-speed working condition.

In an embodiment, the motor shaft is fastened to the reducer input shaft via a spline in a radial direction of the motor, and the oil through pipe includes at least one spline lubricant hole. The motor shaft cavity is configured to accommodate a part of the oil through pipe, and in the radial direction of the motor, projections of the oil through pipe, the motor shaft, and the reducer input shaft partially overlap. The spline lubricant hole penetrates the oil through pipe in the radial direction of the motor, and in the radial direction of the motor, projections of the spline lubricant hole, the motor shaft, and the reducer input shaft partially overlap.

In this embodiment of this application, splines are correspondingly disposed on a part of an outer wall of the motor shaft and a part of an inner wall of the reducer shaft cavity, and the spline of the motor shaft fits the spline of the reducer shaft cavity, so that the motor shaft can transfer torque to the reducer input shaft via the spline, to implement transmission connection between the motor shaft and the reducer input shaft. In an embodiment, the spline may be the spline of the motor shaft, or the spline of the reducer input shaft, or both the spline of the motor shaft and the spline of the reducer input shaft.

In this embodiment of this application, the spline may be worn when the torque is transferred. The spline needs to be properly lubricated, to avoid a failure. In this embodiment of this application, the oil through pipe includes the at least one spline lubricant hole. The spline lubricant hole is configured to transmit cooling oil to the spline. The spline lubricant hole penetrates the motor shaft in the radial direction of the motor, and the projections of the spline lubricant hole, the motor shaft, and the reducer input shaft in the radial direction of the motor partially overlap, so that the cooling oil flowing into the oil through pipe can flow to the splines of the motor shaft and the reducer input shaft through the spline lubricant hole, to lubricate the splines and reduce wear.

In an embodiment, the oil through pipe includes at least one spline oil guide groove, and the spline oil guide groove communicates with the spline lubricant hole. In the radial direction of the motor, the spline oil guide groove is recessed away from the reducer input shaft from an outer circumferential surface of the oil through pipe. In the axial direction of the motor, the spline lubricant hole communicates with an end face of the oil through pipe. In the radial direction of the motor, projections of the spline oil guide groove, the motor shaft, and the reducer input shaft partially overlap. The spline, the spline lubricant hole, and the spline oil guide groove are arranged in the axial direction of the motor, and the spline lubricant hole and the spline oil guide groove are adjacent in the axial direction of the motor.

In this embodiment of this application, the spline lubricant hole is located in the motor shaft cavity, and the spline lubricant hole is mainly to guide the cooling oil to the outside of the oil through pipe. In this case, a flow direction of the cooling oil needs to be further guided, so that the cooling oil flowing out of the spline lubricant hole flows to the spline outside the motor shaft cavity. In this solution, the spline oil guide groove is disposed in the oil through pipe. The spline oil guide groove communicates with the spline lubricant hole, the spline lubricant hole and the spline oil guide groove are adjacently disposed in the axial direction of the motor, and the spline oil guide groove is recessed away from the reducer input shaft from the outer circumferential surface of the oil through pipe, so that the spline oil guide groove can be configured to convey, to the spline, the cooling oil flowing out of the spline lubricant hole.

In an embodiment, the oil through pipe includes a plurality of spline lubricant holes and a plurality of spline oil guide grooves, and each of the spline lubricant holes is adjacent to and communicates with one of the spline oil guide grooves in the axial direction of the motor. The plurality of spline lubricant holes are spaced from each other in a circumferential direction of the motor, and the plurality of spline oil guide grooves are spaced from each other in the circumferential direction of the motor. In the axial direction of the motor, an aperture of the spline lubricant hole is less than a length of the spline oil guide groove. In the circumferential direction of the motor, an aperture of the spline lubricant hole is less than a width of the spline oil guide groove.

In this embodiment of this application, the plurality of spline lubricant holes and the plurality of spline oil guide grooves are correspondingly disposed in the oil through pipe, the plurality of spline lubricant holes are spaced from each other in the circumferential direction of the motor, and the plurality of spline oil guide grooves are spaced from each other in the circumferential direction of the motor, so that the cooling oil can flow from different positions to the spline of the motor shaft and the spline of the reducer input shaft. This improves lubricating effect of the cooling oil on the spline, and avoids a failure of the spline.

In this embodiment of this application, in the axial direction of the motor, the aperture of the spline lubricant hole is set to be less than the length of the spline oil guide groove, and the aperture of the spline lubricant hole is small, to avoid an excessively large through hole disposed in the end face of the oil through pipe. This improves structural strength of the oil through pipe. In addition, the length of the spline oil guide groove in the axial direction of the motor is large, to help the spline oil guide groove guide a flow direction. If the length of the spline oil guide groove is excessively small, it may be difficult for the cooling oil to flow to the spline. In the circumferential direction of the motor, the width of the spline oil guide groove is set to be greater than the aperture of the spline lubricant hole, to help reduce flow resistance of the cooling oil in the spline oil guide groove.

In an embodiment, the oil-cooled powertrain further includes a first fastening structure, and the oil through pipe is sealed with and fastened to an inner wall of the reducer shaft cavity via the first fastening structure. In the radial direction of the motor, the oil through pipe, the first fastening structure, and the reducer are sequentially arranged. In the axial direction of the motor shaft, the motor shaft and the first fastening structure are spaced from each other, the spline and the first fastening structure are spaced from each other, and a distance between the motor shaft and the first fastening structure is less than a distance between the spline and the first fastening structure. The spline lubricant hole, the spline oil guide groove, and the first fastening structure are arranged in the axial direction of the motor.

In this embodiment of this application, in the radial direction of the motor, the first fastening structure is located between the oil through pipe and the reducer shaft cavity, and the oil through pipe is fastened in the reducer shaft cavity in the radial direction of the motor via the first fastening structure. In an embodiment, the first fastening structure is in interference fit with the inner wall of the reducer shaft cavity, to help keep the oil through pipe and the reducer shaft cavity oppositely fastened, so that the oil through pipe can stably transmit the cooling oil. In the axial direction of the motor, the spline lubricant hole, the spline oil guide groove, and the first fastening structure are arranged in the axial direction of the motor, and there are gaps between the first fastening structure and the motor shaft and between the first fastening structure and the spline, so that the cooling oil flows through the spline lubricant hole and the spline oil guide groove, and then flows to the splines through the two gaps.

In this embodiment of this application, in the axial direction of the motor, the distance between the motor shaft and the first fastening structure is less than the distance between the spline and the first fastening structure, and the distance between the motor shaft and the first fastening structure is a distance between the first fastening structure and an end face that is of the motor shaft and that is close to the first fastening structure. In the axial direction of the motor, the spline is located on a side that is of the end face of the motor shaft and that is away from the first fastening structure, and a flow direction of the cooling oil from the first fastening structure to the spline is the same as a direction in which the reducer and the motor are arranged, so that the cooling oil can further cool and lubricate another component in the motor in the axial direction of the motor after flowing through the spline. This improves cooling effect on the motor.

In an embodiment, the oil through pipe and the first fastening structure are integrally formed. This solution can enhance stability of fastening the oil through pipe and the reducer shaft cavity in the radial direction of the motor, and helps the first fastening structure stably guide the cooling oil to flow to the spline.

In an embodiment, the first fastening structure includes a sealing groove, the sealing groove is configured to accommodate a sealing ring, and the first fastening structure is sealed with and fastened to the reducer input shaft via the sealing ring. In the radial direction of the motor, the sealing groove is recessed away from the reducer input shaft from an outer circumferential surface of the first fastening structure. In a circumferential direction of the motor, both the sealing groove and the first fastening structure surround the oil through pipe one round.

In this embodiment of this application, the sealing groove is recessed toward the oil through pipe in the radial direction of the motor, the sealing ring is placed in the sealing groove, and the sealing ring is located between the sealing groove and the inner wall of the reducer shaft cavity in the radial direction of the motor. If sealing effect between the first fastening structure and the reducer shaft cavity is poor, when flowing to the first fastening structure, the cooling oil may flow away from the spline through a gap between the first fastening structure and the reducer shaft cavity, resulting in damage to lubricating effect on the spline and a waste of the cooling oil. Two ends of the sealing groove in the axial direction of the motor are fastened to the reducer shaft cavity in the radial direction of the motor. The first fastening structure, the sealing groove, and the sealing ring are jointly configured to seal and fasten the oil through pipe and the reducer input shaft, to prevent relative displacement between the oil through pipe and the reducer input shaft, and prevent the cooling oil from flowing in a direction away from the spline. This increases utilization of the cooling oil.

In an embodiment, the oil through pipe includes a bearing lubricant hole. In the radial direction of the motor, the bearing lubricant hole penetrates the oil through pipe, and the bearing lubricant hole and the inner wall of the reducer shaft cavity are spaced from each other. In the axial direction of the motor, the spline lubricant hole, the first fastening structure, and the bearing lubricant hole are spaced from each other.

In this embodiment of this application, the bearing lubricant hole is configured to convey cooling oil to the reducer bearing, to lubricate the reducer bearing. The reducer bearing is configured to bear a load from the reducer input shaft. If the reducer bearing is not lubricated sufficiently, the reducer bearing is easily ablated or damaged, and normal operation of the reducer is interfered with. In the radial direction of the motor, the bearing lubricant hole penetrates the oil through pipe, and there is a gap between the bearing lubricant hole and the inner wall of the reducer shaft cavity, so that the cooling oil in the oil through pipe can flow to the gap between the bearing lubricant hole and the inner wall of the reducer shaft cavity through the bearing lubricant hole, to provide a basis for the cooling oil to flow to the reducer bearing. The cooling oil sequentially flows to the bearing lubricant hole and the spline lubricant hole in the oil through pipe. In the axial direction of the motor, the bearing lubricant hole, the first fastening structure, and the spline lubricant hole are spaced from each other, to avoid interference between the cooling oil flowing to the reducer bearing and the cooling oil flowing to the spline. This improves lubricating effect on the reducer bearing and the spline.

In an embodiment, the oil-cooled powertrain further includes a second fastening structure, the second fastening structure includes at least one bearing lubricant groove, the bearing lubricant hole communicates with the bearing lubricant groove, and the oil through pipe is fastened to the inner wall of the reducer shaft cavity via the second fastening structure. In the radial direction of the motor, the bearing lubricant groove is recessed toward the oil through pipe from an outer circumferential surface of the second fastening structure. In the radial direction of the motor, the oil through pipe, the second fastening structure, and the reducer input shaft are sequentially arranged. In the axial direction of the motor, the bearing lubricant groove penetrates the second fastening structure, and the spline lubricant hole, the first fastening structure, the bearing lubricant hole, and the second fastening structure are spaced from each other.

In this embodiment of this application, in the radial direction of the motor, the second fastening structure is located between the oil through pipe and the reducer shaft cavity, the bearing lubricant groove is recessed toward the oil through pipe in the radial direction of the motor, and a part, other than the bearing lubricant groove, of the outer circumferential surface of the second fastening structure is used to fasten the oil through pipe and the reducer shaft cavity. The bearing lubricant groove communicates with the bearing lubricant hole, and the bearing lubricant groove penetrates the second fastening structure in the axial direction of the motor, so that the bearing lubricant groove plays a role in guiding a flow direction of cooling oil. Specifically, the cooling oil flows out from the bearing lubricant hole to the gap between the oil through pipe and the reducer shaft cavity, and then is guided to the reducer bearing through the bearing lubricant groove, to lubricate the reducer bearing.

In an embodiment, the second fastening structure and the oil through pipe are integrally formed. This solution can enhance stability of fastening the oil through pipe and the reducer shaft cavity in the radial direction of the motor, and helps the second fastening structure stably guide the flow direction of the cooling oil.

In an embodiment, in the axial direction of the motor, a length of the oil through pipe is less than a length of the reducer input shaft, and both a length of the first fastening structure and a length of the second fastening structure are less than a distance between the first fastening structure and the second fastening structure.

In this embodiment of this application, because both the oil through pipe and a part of the motor shaft are located in the reducer shaft cavity, and the length of the oil through pipe is less than the length of the reducer input shaft, to provide space for the reducer shaft cavity to accommodate the part of the motor shaft; and a small size of the oil through pipe in the axial direction of the motor helps reduce costs. Both the length of the first fastening structure and the length of the second fastening structure are less than the distance between the first fastening structure and the second fastening structure. This can reduce a difficulty in assembling the first fastening structure and the second fastening structure in the reducer shaft cavity, and helps reduce manufacturing costs. In addition, the length of the second fastening structure in the axial direction of the motor is equivalent to a length of the bearing lubricant groove in the axial direction of the motor, and both the length of the first fastening structure and the length of the second fastening structure are less than the distance between the first fastening structure and the second fastening structure, to shorten a transmission path of the cooling oil in the bearing lubricant groove. This helps reduce a transmission loss of the cooling oil between the bearing lubricant hole and the reducer bearing.

In an embodiment, in the axial direction of the motor, a distance between the first fastening structure and the spline lubricant hole is less than the distance between the first fastening structure and the second fastening structure. In the axial direction of the motor, a distance between the bearing lubricant hole and at least one of the first fastening structure and the second fastening structure is greater than the distance between the first fastening structure and the spline lubricant hole.

In this embodiment of this application, the distance between the first fastening structure and the spline lubricant hole is small, to shorten a cooling path of the cooling oil between the spline lubricant hole and the first fastening structure, thereby reducing a loss of the cooling oil. The distance between the first fastening structure and the second fastening structure and the distance between the first fastening structure and the bearing lubricant hole are large, to avoid mutual interference between the cooling oil flowing to the spline and the cooling oil flowing to the reducer bearing. This helps improve lubricating effect on the spline and the reducer bearing. In this embodiment of this application, the distance between the second fastening structure and the bearing lubricant hole is greater than the distance between the first fastening structure and the spline lubricant hole, and the distance between the first fastening structure and the spline lubricant hole is small in the axial direction of the motor, to shorten the cooling path of the cooling oil between the spline lubricant hole and the first fastening structure, thereby reducing the loss of the cooling oil.

In an embodiment, the second fastening structure includes a plurality of bearing lubricant grooves, and the plurality of bearing lubricant grooves are spaced from each other in a circumferential direction of the motor. An aperture of the bearing lubricant hole is less than a length of each of the bearing lubricant grooves in the axial direction of the motor, and the aperture of the bearing lubricant hole is less than a length of each of the bearing lubricant grooves in the circumferential direction of the motor.

In this embodiment of this application, the plurality of bearing lubricant grooves are spaced from each other on the second fastening structure in the circumferential direction of the motor, so that cooling oil can flow to the reducer bearing from different positions through the plurality of bearing lubricant grooves, to enhance lubricating effect on the reducer bearing. The aperture of the bearing lubricant hole is less than the length of each bearing lubricant groove in the axial direction of the motor and the length of each bearing lubricant groove in the circumferential direction of the motor, and the aperture of the bearing lubricant hole is small, to avoid a through hole with an excessively large aperture in the oil through pipe. This improves structural strength of the oil through pipe, and helps limit a flow volume of the cooling oil flowing through the bearing lubricant hole. Therefore, the cooling oil in the oil through pipe is mainly used to cool the reducer and a heat emitting component in the motor. The lengths of the bearing lubricant groove in the axial direction of the motor and in the circumferential direction of the motor are large, to ensure flow guide effect of the bearing lubricant hole on the cooling oil. Therefore, the cooling oil flowing through the bearing lubricant hole can be used to lubricate the reducer bearing.

In an embodiment, the reducer includes reduction teeth and a reducer bearing, the reduction teeth are fastened to an outer circumferential surface of the reducer input shaft in the radial direction of the motor, and the reducer bearing sleeves the reducer input shaft. In the axial direction of the motor, the motor shaft, the reduction teeth, and the reducer bearing are spaced from each other. A projection of the bearing lubricant hole in the radial direction of the motor overlaps a part of a projection of the reduction teeth in the radial direction of the motor. A projection of the second fastening structure in the radial direction of the motor partially overlaps a projection of the reducer bearing in the radial direction of the motor.

In this embodiment of this application, the reducer bearing sleeves the reducer input shaft, the reducer bearing is configured to bear the load applied by the reducer input shaft, and the cooling oil can lubricate the reducer bearing through the bearing lubricant hole. This helps prolong a service life of the reducer bearing. In the axial direction of the motor, the motor shaft, the reduction teeth, and the reducer bearing are spaced from each other, to avoid mutual interference in a mechanical transmission process, and ensure normal operation of the reducer and the motor. In the radial direction of the motor, the projection of the bearing lubricant hole overlaps the part of the projection of the reduction teeth, and the projection of the second fastening structure in the radial direction of the motor partially overlaps the projection of the reducer bearing in the radial direction of the motor. It indicates that the reducer bearing and the reduction teeth are adjacently disposed in the axial direction of the motor. There is a gap in the reducer bearing, and the cooling oil flowing into the reducer bearing flows to the reduction teeth through the gap in the reducer bearing. The cooling oil sequentially lubricates the reducer bearing and the reduction teeth, to ensure normal operation of the reducer.

In an embodiment, the oil-cooled powertrain further includes a reducer end cover, the reducer input shaft is rotatably connected to the reducer end cover via the reducer bearing, the reducer end cover, the reducer input shaft, and the motor shaft are arranged in the axial direction of the motor, the reducer end cover includes a blocking member, an oil guide member, and a fastening hole, the fastening hole penetrates the reducer end cover in the axial direction of the motor, the blocking member and the oil guide member are located in the fastening hole, and the oil guide member is configured to communicate the reducer input shaft and the oil through pipe. In the axial direction of the motor, the reducer input shaft and the reducer end cover are spaced from each other, and the oil through pipe, the oil guide member, and the blocking member are spaced from each other. In the axial direction of the motor, the reduction teeth, the reducer bearing, the oil guide member, and the blocking member are spaced from each other.

In this embodiment of this application, the reducer input shaft and the reducer end cover are spaced from each other in the axial direction of the motor, to provide space for disposing the oil guide member between the reducer end cover and the reducer input shaft. The blocking member and the oil guide member are spaced from each other in the axial direction of the motor. This can effectively reduce an acting force and wear on the oil guide member, prolong a service life, and ensure flow guide effect of the oil guide member. The reduction teeth and the reducer bearing are spaced from each other in the axial direction of the motor. This can avoid wear between the reduction teeth and the reducer bearing, and prolong a service life. The reduction teeth and the reducer bearing are spaced from the oil guide member and the blocking member, so that assembly of the foregoing structure is not affected even if there is a design tolerance. This reduces a design difficulty and an assembly difficulty.

In an embodiment, the oil-cooled powertrain includes an integrated housing, the integrated housing includes a reducer accommodating cavity and a motor accommodating cavity, the motor accommodating cavity is configured to accommodate the motor, the reducer accommodating cavity is configured to accommodate the reducer, in a first direction, the motor accommodating cavity penetrates the integrated housing and communicates with the reducer accommodating cavity, the first direction is parallel to the axial direction of the motor, the motor end cover and the reducer end cover are respectively arranged on two sides of the motor in the first direction, the oil through pipe and the reducer are located in the reducer accommodating cavity, the oil through pipe communicates with the reducer accommodating cavity, and the motor shaft cavity communicates with the motor accommodating cavity.

In an embodiment, the integrated housing includes a control unit accommodating cavity, a direct current input interface mounting hole, and an alternating current output interface mounting hole, the control unit accommodating cavity is configured to accommodate the motor control unit, the control unit accommodating cavity and the motor accommodating cavity are arranged in a second direction, and the second direction is perpendicular to the first direction. In the first direction, the direct current input interface mounting hole and the alternating current output interface mounting hole separately penetrate the integrated housing and communicate with the control unit accommodating cavity, the direct current input interface mounting hole and the alternating current output interface mounting hole are oppositely arranged, and a spacing between the direct current input interface mounting hole and any one of the oil through pipe, the oil guide member, and the blocking member is less than a spacing between the alternating current output interface mounting hole and any one of the oil through pipe, the oil guide member, and the blocking member.

According to a second aspect, an embodiment of this application provides an electric vehicle, including a vehicle body, wheels, and the oil-cooled powertrain according to any one of the foregoing descriptions. The oil-cooled powertrain is configured to drive the wheel, the vehicle body is configured to fasten the oil-cooled powertrain, a heat exchanger in the oil-cooled powertrain is configured to exchange heat with a cooling system in the electric vehicle, and the heat exchanger is configured to communicate an oil through pipe, a reducer shaft cavity, a reducer accommodating cavity, a motor shaft cavity, and a motor accommodating cavity that are in the oil-cooled powertrain. The powertrain provided in this application includes the oil through pipe and a structure on the oil through pipe, to improve cooling and lubricating effect on components such as a spline and a reducer bearing, and provide reliability and a heat dissipation capability of the powertrain, thereby improving comprehensive performance of the electric vehicle.

### BRIEF DESCRIPTION OF DRAWINGS

To describe technical solutions in embodiments of this application more clearly, the following describes accompanying drawings used in embodiments of this application.
FIG. 1 is a diagram of a structure of a vehicle according to an embodiment of this application;
FIG. 2 is a diagram of a structure of a powertrain according to an embodiment of this application;
FIG. 3 is a diagram of a partial structure of a powertrain according to an embodiment of this application;
FIG. 4 is a diagram of a partial structure of a powertrain according to an embodiment of this application;
FIG. 5 is a partial exploded diagram of a powertrain according to an embodiment of this application;
FIG. 6 is a partial enlarged view of a part M1 in the powertrain shown in FIG. 5;
FIG. 7 is a diagram of a partial structure of a powertrain according to an embodiment of this application;
FIG. 8 is a diagram of a structure of a powertrain according to an embodiment of this application;
FIG. 9 is a top view of a powertrain according to an embodiment of this application;
FIG. 10 is a partial exploded diagram of a powertrain according to an embodiment of this application;
FIG. 11 is a diagram of a structure of a powertrain according to an embodiment of this application;
FIG. 12 is a sectional view of the powertrain shown in FIG. 11 along AA;
FIG. 13 is a partial exploded diagram of a powertrain according to an embodiment of this application;
FIG. 14 is a partial enlarged view of a part M2 in the powertrain shown in FIG. 12;
FIG. 15 is a diagram of a structure of a reducer input shaft and a motor shaft according to an embodiment of this application;
FIG. 16 is a sectional view of the reducer input shaft and the motor shaft shown in FIG. 15 along BB;
FIG. 17 is a diagram of a structure of an oil through pipe according to an embodiment of this application;
FIG. 18 is a partial enlarged view of a part M3 in the powertrain shown in FIG. 13;
FIG. 19 is a diagram of a structure of a reducer end cover according to an embodiment of this application;
FIG. 20 is a diagram of a structure of an oil guide member according to an embodiment of this application;
FIG. 21 is a partial exploded diagram of a powertrain according to an embodiment of this application;
FIG. 22 is a diagram of a structure of a motor according to an embodiment of this application;
FIG. 23 is a sectional view of the motor shown in FIG. 22 along CC;
FIG. 24 is a partial enlarged view of a part M4 in the motor shown in FIG. 23; and
FIG. 25 is a diagram of a partial structure of a powertrain according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, position terms such as "top" and "bottom" are defined relative to positions of schematically placed structures in the accompanying drawings. It should be understood that these position terms are relative concepts used for relative description and clarification, and may correspondingly change based on changes in the positions of the structures.

For ease of understanding, the following explains and describes related technical terms used in embodiments of this application.

Parallelism: Parallelism defined in embodiments of this application is not limited to absolute parallelism. The definition of the parallelism may be understood as basic parallelism. A case in which there is no absolute parallelism caused by an assembly tolerance, a design tolerance, and impact of structure flatness, or another factor is allowed.

Perpendicularity: Perpendicularity defined in embodiments of this application is not limited to an absolute vertical intersection (an included angle is 90 degrees) relationship. A case in which there is no absolute perpendicular intersection relationship caused by an assembly tolerance, a design tolerance, impact of structure flatness, and another factor is allowed. An error within a small angle range is allowed. For example, a relationship within an assembly error range of 80 degrees to 100 degrees may be understood as the perpendicular relationship.

First direction Y: is parallel to an axial direction of a motor, where the axial direction of the motor is an axial direction of a motor shaft.

Second direction Z: is perpendicular to a first direction Y and a third direction X.

Third direction X: is perpendicular to a first direction Y and a second direction Z.

To improve overall performance of an electric vehicle, it is necessary to comprehensively consider a plurality of design requirements such as miniaturization, power density, reliability, heat dissipation performance, and power performance of a powertrain. Problems in a layout design and a structure design of each component in a powertrain affect miniaturization or heat dissipation performance of the powertrain; affect energy conversion efficiency, resulting in a decrease in power density of the powertrain; and also affect an energy transfer path, resulting in a decrease in reliability and power performance of the powertrain. The powertrain generates much heat inside when being in an operating state, and cooling oil needs to be supplied to the powertrain, to control a temperature rise of the powertrain. However, in a current powertrain, a cooling path of cooling oil has small coverage. Consequently, heat dissipation effect for the powertrain is not ideal enough. This affects energy conversion efficiency, resulting in a decrease in power density of the powertrain; and also effects an energy transfer path, resulting in deterioration of power performance of the powertrain.

Embodiments of this application provide an oil-cooled powertrain. The oil-cooled powertrain includes a reducer, a motor, and an oil through pipe. The reducer includes a reducer input shaft. The motor includes a motor shaft. The reducer input shaft is fastened to the motor shaft, and the motor shaft is configured to transmit power to the reducer input shaft. The reducer input shaft includes a reducer shaft cavity. The reducer shaft cavity is configured to accommodate the oil through pipe and a part of the motor shaft. The oil through pipe and the reducer input shaft are oppositely fastened. The motor shaft includes the motor shaft cavity. The oil through pipe is configured to convey cooling oil to the motor shaft cavity. In an axial direction of the motor, the reducer shaft cavity penetrates the reducer input shaft, and the motor shaft cavity penetrates the motor shaft. The oil through pipe and the motor shaft are arranged in the axial direction of the motor, and the oil through pipe communicates with the motor shaft cavity. In embodiments of this application, the oil through pipe is disposed in the reducer shaft cavity, to convey the cooling oil from the reducer to the motor. This expands coverage of the cooling oil in the oil-cooled powertrain, helps improve cooling efficiency, and increases utilization of the cooling oil.

The oil-cooled powertrain provided in embodiments of this application is used in an electric vehicle, to improve overall performance of the electric vehicle.

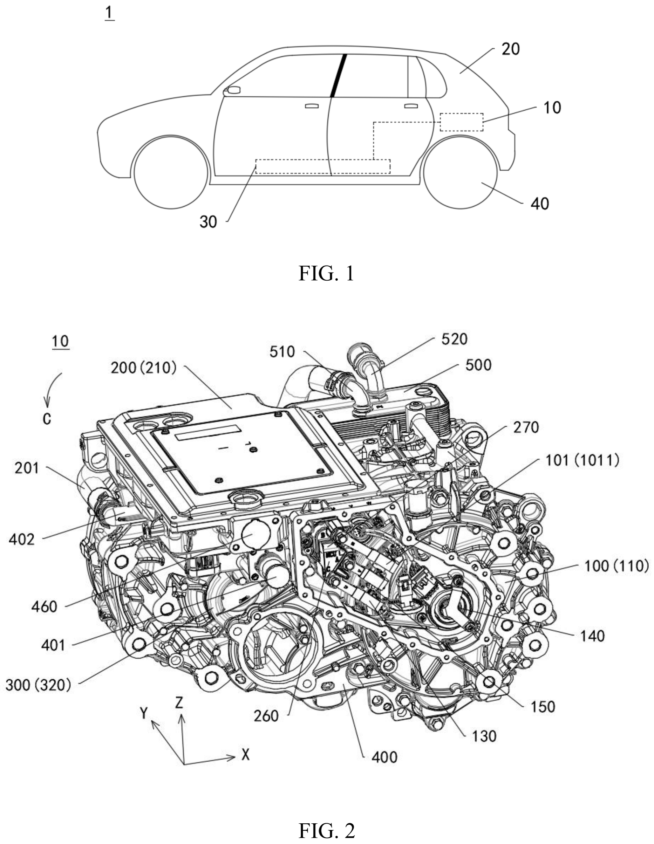

FIG. 1 is a diagram of a structure of an electric vehicle 1 according to an embodiment of this application. In this embodiment of this application, the electric vehicle 1 includes an oil-cooled powertrain 10, a vehicle body 20, a battery pack 30, and wheels 40. The oil-cooled powertrain 10 and the battery pack 30 are fastened to the vehicle body 20. The oil-cooled powertrain 10 is configured to receive power supplied by the battery pack 30, and is configured to drive the wheel 40.

In this embodiment of this application, the battery pack 30 may also be referred to as a power battery.

In this embodiment of this application, the electric vehicle 1 is a wheeled device driven or pulled by a power apparatus. In an implementation, the electric vehicle 1 includes a special operation vehicle such as a passenger vehicle, a commercial vehicle, an engineering rescue vehicle, a sprinkler, a suction-type sewer scavenger, a cement mixer, a crane, or a medical vehicle. For example, the electric vehicle 1 includes an electric vehicle (Electric Vehicle, EV), a pure electric vehicle (Pure Electric Vehicle/Battery Electric Vehicle, PEV/BEV), a hybrid electric vehicle (Hybrid Electric Vehicle, HEV for short), a range extended electric vehicle (Range Extended Electric Vehicle, REEV), a plug-in hybrid electric vehicle (Plug-in Hybrid Electric Vehicle, PHEV), a new energy vehicle (New Energy Vehicle), or the like.

In this embodiment of this application, the electric vehicle 1 includes one or more oil-cooled powertrains 10. In an embodiment, the electric vehicle 1 is a front-wheel or rear-wheel drive vehicle. The electric vehicle 1 includes one oil-cooled powertrain 10, and the oil-cooled powertrain 10 is configured to be in transmission connection to front wheels or rear wheels of the electric vehicle 1. In an embodiment, the electric vehicle 1 is a front-rear-wheel dual-drive vehicle. The electric vehicle 1 includes two oil-cooled powertrains 10. The two oil-cooled powertrains 10 are respectively configured to be in transmission connection to a front wheel and a rear wheel of the electric vehicle 1. In an embodiment, the electric vehicle 1 is a front-rear-wheel four-drive vehicle. The electric vehicle 1 includes four oil-cooled powertrains 10. The four oil-cooled powertrains 10 are respectively configured to be in transmission connection to four wheels of the electric vehicle 1.

The following describes in detail the oil-cooled powertrain 10 provided in embodiments of this application.

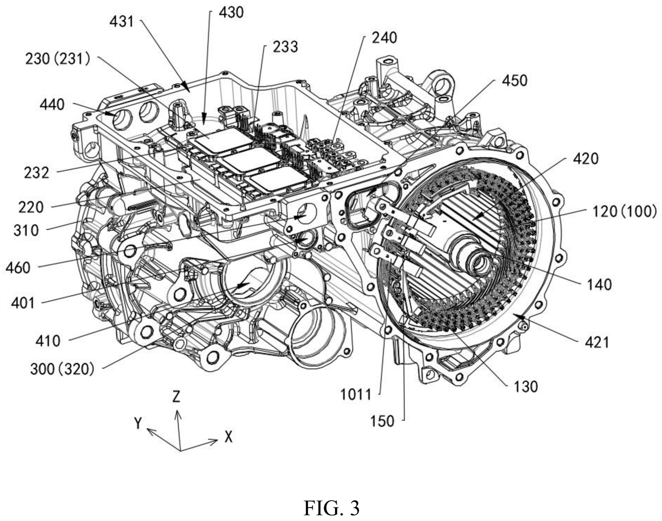

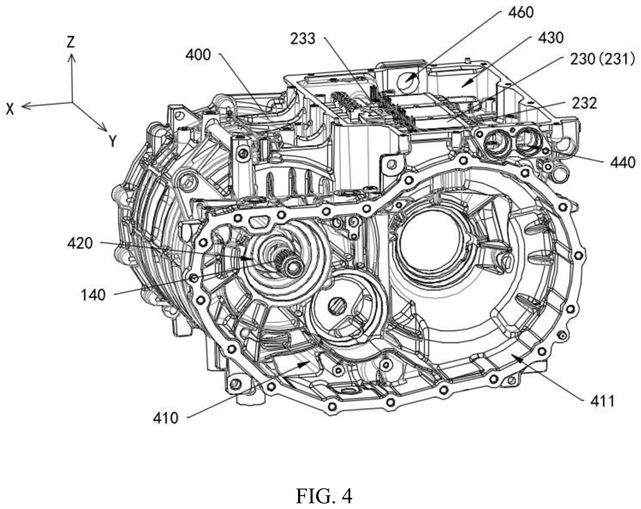

Refer to FIG. 2 to FIG. 4. FIG. 2 is a diagram of a structure of the oil-cooled powertrain 10 according to an embodiment of this application. FIG. 3 is a diagram of a partial structure of the oil-cooled powertrain 10 according to an embodiment of this application. FIG. 4 is a diagram of a partial structure of the oil-cooled powertrain 10 according to an embodiment of this application.

As shown in FIG. 2, the oil-cooled powertrain 10 includes a motor 100, a motor control unit 200, and a reducer 300 (as shown in FIG. 3). The motor control unit 200 is configured to receive a direct current from the battery pack 30, and is configured to output an alternating current to the motor 100. The motor 100 is configured to receive the alternating current output by the motor control unit 200, and is configured to drive the wheel 40 of the electric vehicle 1. The reducer 300 is configured to transfer power of the motor 100 to the wheel 40.

As shown in FIG. 3, the motor 100 includes a motor stator 120, a motor winding 130, a motor shaft 140, and a motor rotor (not shown). An alternating flux generated by the motor winding 130 interacts with a permanent magnet flux generated by the motor rotor, so that the motor rotor rotates relative to the motor stator 120. The motor rotor is fastened to the motor shaft 140, so that the motor shaft 140 rotates with the rotor. The motor stator 120 is rotatably connected to the motor shaft 140, so that the motor shaft 140 can rotate relative to the motor stator 120, to convert electric energy into mechanical energy. An output end of the motor shaft 140 is configured to transmit the mechanical energy.

With reference to FIG. 3 and FIG. 4, an integrated housing 400 includes a reducer accommodating cavity 410, a motor accommodating cavity 420, and a control unit accommodating cavity 430.

In this embodiment of this application, the motor accommodating cavity 420 is configured to accommodate the motor 100. As shown in FIG. 4, the motor accommodating cavity 420 penetrates the integrated housing 400 in a first direction Y. The motor stator 120 is nested in the motor accommodating cavity 420 in a fastening manner.

In this embodiment of this application, the reducer accommodating cavity 410 is configured to accommodate the reducer 300, the reducer accommodating cavity 410 communicates with the motor accommodating cavity 420, and the motor shaft 140 of the motor 100 is fastened to a reducer input shaft of the reducer 300.

In this embodiment of this application, the control unit accommodating cavity 430 is configured to accommodate the motor control unit 200. With reference to FIG. 3 and FIG. 4, the control unit accommodating cavity 430 and the motor accommodating cavity 420 are arranged in a second direction Z. In this embodiment of this application, the motor control unit 200 is configured to receive the direct current from the battery pack 30, and is configured to output the alternating current to the motor 100.

In this embodiment of this application, the integrated housing 400 is configured to accommodate the motor 100, the motor control unit 200, and the reducer 300. The motor 100 is located in the motor accommodating cavity 420 of the integrated housing 400, the motor control unit 200 is located in the control unit accommodating cavity 430 of the integrated housing 400, and the reducer 300 is located in the reducer accommodating cavity 410 of the integrated housing 400.

In an embodiment, the motor 100 and the motor control unit 200 share one integrated housing 400. The integrated housing 400 includes a motor housing. The motor housing forms the motor accommodating cavity 420 through enclosing, or a part that is of the integrated housing 400 and that forms the motor accommodating cavity 420 through enclosing forms the motor housing of the motor 100. The integrated housing 400 includes a control unit housing. The control unit housing forms the control unit accommodating cavity 430 through enclosing, or a part that is of the integrated housing 400 and that forms the control unit accommodating cavity 430 through enclosing forms the control unit housing of the motor control unit 200.

In an embodiment, the motor 100, the motor control unit 200, and the reducer 300 share one integrated housing 400. The integrated housing 400 includes a motor housing, a control unit housing, and a reducer housing. The motor housing forms the motor accommodating cavity 420 through enclosing. The control unit housing forms the control unit accommodating cavity 430 through enclosing, and the reducer housing forms the reducer accommodating cavity 410 through enclosing. In an embodiment, the motor housing and the control unit housing are of an integrated structure, or the integrated housing 400 is of an integrated structure. In an embodiment, the motor housing and the control unit housing share a housing of an adjacent part. In an embodiment, the motor housing, the control unit housing, and the reducer housing are of an integrated structure.

Compared with a split oil-cooled powertrain 10, in the oil-cooled powertrain 10 provided in this embodiment of this application, the integrated housing 400 is used to accommodate the motor 100, the motor control unit 200, and the reducer 300. This can improve integration of the oil-cooled powertrain 10, increase space utilization of the oil-cooled powertrain 10, and reduce costs. In addition, the control unit accommodating cavity 430 and the motor accommodating cavity 420 in the integrated housing 400 of the oil-cooled powertrain 10 provided in this embodiment of this application are arranged in the second direction Z, and the control unit accommodating cavity 430 and the motor accommodating cavity 420 partially overlap in a third direction X. This helps reduce space occupied by the oil-cooled powertrain 10 in the second direction Z.

With reference to FIG. 2, FIG. 3, FIG. 4, and FIG. 5, in an embodiment, the integrated housing 400 further includes a direct current input interface mounting hole 440 and an alternating current output interface mounting hole 450.

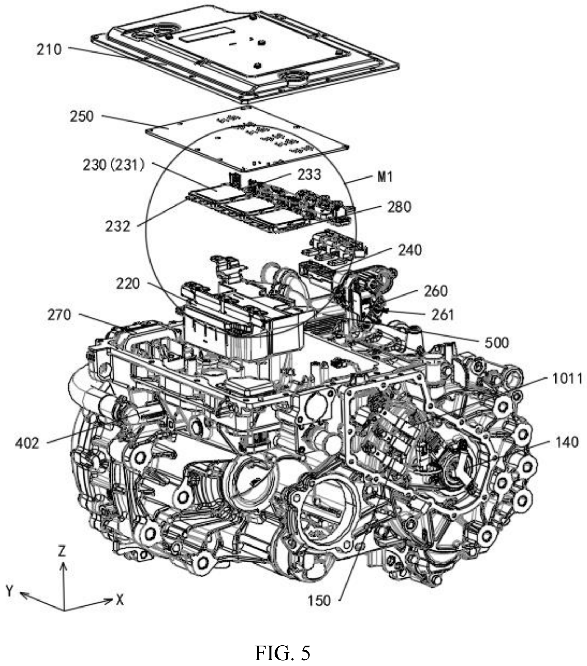

As shown in FIG. 5, the motor control unit 200 further includes a direct current input interface 270, and the direct current input interface mounting hole 440 is configured to fasten the direct current input interface 270. The direct current input interface 270 is configured to connect to the battery pack 30 to receive the direct current.

With reference to FIG. 2 and FIG. 5, the motor control unit 200 further includes an alternating current output interface 260, and the alternating current output interface mounting hole 450 is configured to fasten the alternating current output interface 260. As shown in FIG. 5, the alternating current output interface 260 is electrically connected to a copper bar component 240 and three input copper bars 1011. In this embodiment of this application, the alternating current output interface 260 includes three wiring ports 261. The three wiring ports 261 are electrically connected to a wiring terminal of the motor winding 130 through the three input copper bars 1011 respectively, and the three input copper bars 1011 are spaced from each other.

In this embodiment of this application, the motor control unit 200 receives power supplied by the battery pack through the direct current input interface 270, and outputs the alternating current to the motor winding 130 of the motor 100 through the alternating current output interface 260. After the alternating current is supplied to the motor winding 130 of the motor 100, an alternating flux is generated.

With reference to FIG. 3 and FIG. 4, the wiring terminal of the motor winding 130 and the output end of the motor shaft 140 are oppositely arranged in the first direction Y. The direct current input interface mounting hole 440 and the alternating current output interface mounting hole 450 separately penetrate the integrated housing 400 in the first direction Y and communicate with the control unit accommodating cavity 430. The direct current input interface mounting hole 440 and the alternating current output interface mounting hole 450 are oppositely arranged in the first direction Y, the alternating current output interface mounting hole 450 and the wiring terminal of the motor winding 130 are arranged on one side in the first direction Y, and the direct current input interface mounting hole 440 and the output end of the motor shaft 140 are arranged on the other side in the first direction Y.

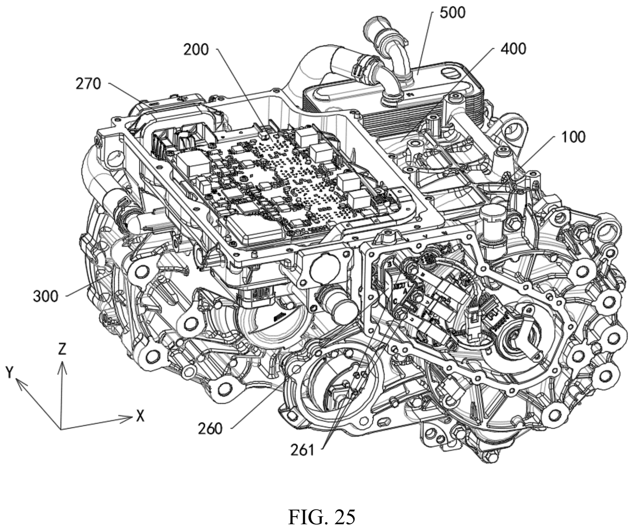

Still refer to FIG. 3 and FIG. 25. FIG. 25 is a diagram of a partial structure of the oil-cooled powertrain 10 according to an embodiment of this application. In this embodiment of this application, energy is transferred sequentially through the direct current input interface 270 in the direct current input interface mounting hole 440, the motor control unit 200, the alternating current output interface 260 in the alternating current output interface mounting hole 450, the wiring terminal of the motor winding 130, and the output end of the motor shaft 140.

In this embodiment of this application, the direct current input interface mounting hole 440 and the alternating current output interface mounting hole 450 are oppositely disposed in the first direction Y, and are respectively located at two ends of the control unit accommodating cavity 430 in the first direction Y. The direct current input interface 270 configured to transmit the direct current to the motor control unit 200 is mounted in the direct current input interface mounting hole 440 and penetrates to an inner side of the control unit accommodating cavity 430. In other words, the motor control unit 200 is electrically connected to the battery pack 30 through the direct current input interface 270. In an embodiment, the direct current input interface 270 (as shown in FIG. 5) of the motor control unit 200 is mounted in the direct current input interface mounting hole 440. The alternating current output interface 260 configured to transmit the alternating current to the motor 100 may be mounted in the alternating current output interface mounting hole 450 and penetrate to an outer side of the control unit accommodating cavity 430. In other words, the motor control unit 200 is electrically connected to the motor 100 through the alternating current output interface 260. In this embodiment of this application, the direct current input interface mounting hole 440 and the alternating current output interface mounting hole 450 are oppositely disposed in the first direction Y. This helps avoid electrical interference between the direct current and the alternating current in a transmission process, and further improves safety performance. The alternating current output interface mounting hole 450 and the motor 100 are adjacently arranged. This helps shorten a distance between the motor control unit 200 and the wiring terminal of the motor 100.

In this embodiment of this application, the motor winding 130 is connected to the motor control unit 200 via an electrical connector 150 (as shown in FIG. 5). The wiring terminal of the motor winding 130 is configured to receive the alternating current transmitted by the motor control unit 200. The wiring terminal of the motor winding 130 and the alternating current output interface mounting hole 450 are adjacently disposed and are located on a same side of the control unit accommodating cavity 430, so that an energy transmission path between the motor control unit 200 and the motor 100 is short, and an impedance is smaller. This helps reduce an energy loss on a transmission path and improve energy transmission efficiency. In addition, a layout of the motor control unit 200 and the motor 100 is compact and regular. This helps reduce a volume of the oil-cooled powertrain 10, and helps optimize a layout of the entire vehicle. The wiring terminal of the motor winding 130 and the output end of the motor shaft 140 are oppositely disposed in the first direction Y, and the output end of the motor shaft 140 and the direct current input interface mounting hole 440 are disposed on a same side. In other words, the axial direction of the motor shaft 140 is parallel to a direction in which the direct current input interface mounting hole 440 and the alternating current output interface 260 are arranged. This helps reduce the volume of the oil-cooled powertrain 10.

According to the oil-cooled powertrain 10 provided in this embodiment of this application, the motor 100 and the motor control unit 200 are jointly disposed in the integrated housing 400. This can improve integration of the oil-cooled powertrain 10, reduce the volume and costs, help implement a lightweight design of the oil-cooled powertrain 10, and increase power density. In addition, a layout design of the direct current input interface mounting hole 440, the alternating current output interface mounting hole 450, the wiring terminal of the motor winding 130, and the output end of the motor shaft 140 in the oil-cooled powertrain 10 provided in this embodiment of this application complies with a flow direction of a power flow. This shortens a transfer path of the energy in the oil-cooled powertrain 10, and helps reduce an energy loss in a transmission process.

FIG. 5 is a partial exploded view of the oil-cooled powertrain 10 according to an embodiment of this application. In an embodiment, the motor control unit 200 includes a capacitor module 220, a power module 230, and the copper bar component 240 (as shown in FIG. 5). The power module 230 and the capacitor module 220 are configured to receive a direct current, and the power module 230 is configured to output an alternating current via the copper bar component 240. The control unit accommodating cavity 430 is configured to accommodate the capacitor module 220, the power module 230, and the copper bar component 240 (as shown in FIG. 5).

The capacitor module 220 is configured to transmit the direct current and adjust the direct current. In an embodiment, the capacitor module 220 is configured to smooth a voltage, so that the voltage is still smooth in the power module 230. The capacitor module 220 may further reduce an inductance parameter, weaken a peak voltage, absorb a high pulse current, prevent voltage overcharge and impact of a transient voltage on the motor control unit 200, and the like.

The power module 230 is a combination of power electronic devices that can implement a power conversion function. The power electronic devices include an insulated gate bipolar transistor (Insulated Gate Bipolar Transistor, IGBT), a silicon carbide power transistor, a silicon transistor, a metal-oxide-semiconductor field-effect transistor (Metal-Oxide-Semiconductor Field-Effect Transistor, MOSFET), a diode, and the like. The copper bar component 240 is configured to transmit the alternating current output by the power module 230.

Still refer to FIG. 3 and FIG. 25. In an embodiment, in the first direction Y, a projection of the direct current input interface mounting hole 440 at least partially overlaps a projection of the capacitor module 220. In this embodiment of this application, energy is sequentially transferred through the direct current input interface 270 in the direct current input interface mounting hole 440, the capacitor module 220, the power module 230, and the alternating current output interface 260 in the alternating current output interface mounting hole 450. The direct current input interface mounting hole 440 and the alternating current output interface mounting hole 450 are oppositely disposed in the first direction Y, that is, a flow direction of a power flow between the direct current input interface 270 and the alternating current output interface 270 is the first direction Y. In this solution, the projection of the direct current input interface mounting hole 440 is set to at least partially overlap the projection of the capacitor module 220, so that an energy transfer path between the direct current input interface 270 in the direct current input interface mounting hole 440 and the capacitor module 220 is short. This helps reduce an energy loss inside the motor control unit 200.

It should be noted that, in this embodiment of this application, the projection in the first direction Y is a projection in the first direction Y on a projection plane perpendicular to the first direction Y, where the projection plane of the projection in the first direction Y is perpendicular to the first direction Y; a projection in the second direction Z is a projection in the second direction Z on a projection plane perpendicular to the second direction Z, where the projection plane of the projection in the second direction Z is perpendicular to the second direction Z; and a projection in the third direction X is a projection in the third direction X on a projection plane perpendicular to the third direction X, where the projection plane of the projection in the third direction X is perpendicular to the third direction X.

In an embodiment, a projection plane of a projection of the direct current input interface mounting hole 440 in the first direction Y is the same as a projection plane of a projection of the capacitor module 220 in the first direction Y. The projection of the direct current input interface mounting hole 440 in the first direction Y is a projection of a region, enclosed by a hole wall of the direct current input interface mounting hole 440, in the first direction Y.

In an embodiment, a projection of the direct current input interface mounting hole 440 at least partially overlaps a projection of the power module 230 (as shown in FIG. 3). This solution helps shorten an energy transfer path between the direct current input interface in the direct current input interface mounting hole 440 and the power module 230, and reduce an energy loss inside the motor control unit 200.

In an embodiment, a projection of the direct current input interface mounting hole 440 at least partially overlaps both the projection of the capacitor module 220 and the projection of the power module 230 (as shown in FIG. 3). This solution helps shorten an energy transfer path between the direct current input interface in the direct current input interface mounting hole 440, the capacitor module 220, and the power module 230, and reduce an energy loss inside the motor control unit 200.

In an embodiment, in the first direction Y, a projection of the alternating current output interface mounting hole 450 at least partially overlaps the projection of the capacitor module 220. The projection of the alternating current output interface mounting hole 450 in the first direction Y is a projection of a region, enclosed by a hole wall of the alternating current output interface mounting hole 450, in the first direction Y. In this solution, the projection of the alternating current output interface mounting hole 450 is set to at least partially overlap the projection of the capacitor module 220, so that an energy transfer path between the alternating current output interface mounting hole 450 and the capacitor module 220 is short. This helps reduce an energy loss inside the motor control unit 200.

In an embodiment, a projection of the alternating current output interface mounting hole 450 at least partially overlaps the projection of the power module 230. This solution helps shorten an energy transfer path between the alternating current output interface 260 in the alternating current output interface mounting hole 450 and the power module 230, and reduce an energy loss inside the motor control unit 200.

In an embodiment, a projection of the alternating current output interface mounting hole 450 at least partially overlaps both the projection of the capacitor module 220 and the projection of the power module 230. This solution helps shorten an energy transfer path between the alternating current output interface 260 in the alternating current output interface mounting hole 450, the capacitor module 220, and the power module 230, and reduce an energy loss inside the motor control unit 200.

In an embodiment, a projection of the alternating current output interface mounting hole 450 does not overlap the projection of the power module 230 or the projection of the capacitor module 220, and the alternating current output interface mounting hole 450 is disposed close to the motor shaft 140. This helps provide mounting space for connection between the power module 230 and the copper bar component 240.

In an embodiment, the capacitor module 220 and the power module 230 are stacked in the second direction Z (as shown in FIG. 3), the copper bar component 240 and the power module 230 are adjacently arranged in the third direction X (as shown in FIG. 3 or FIG. 5), and the third direction X is perpendicular to the first direction Y and the second direction Z. In this embodiment of this application, the capacitor module 220 and the power module 230 are stacked in the second direction Z, and the copper bar component 240 is adjacent to the power module 230 in the third direction X. In comparison with a solution in which the capacitor module 220, the power module 230, and the copper bar component 240 are tiled in the first direction Y, this solution helps reduce a size value of the motor control unit 200 in the first direction Y, and reduces the volume of the oil-cooled powertrain 10. This helps connect the capacitor module 220 and the power module 230 in the second direction Z, to shorten a connection path and reduce power transmission energy consumption, so that a power flow between the capacitor module 220 and the power module 230 is smooth.

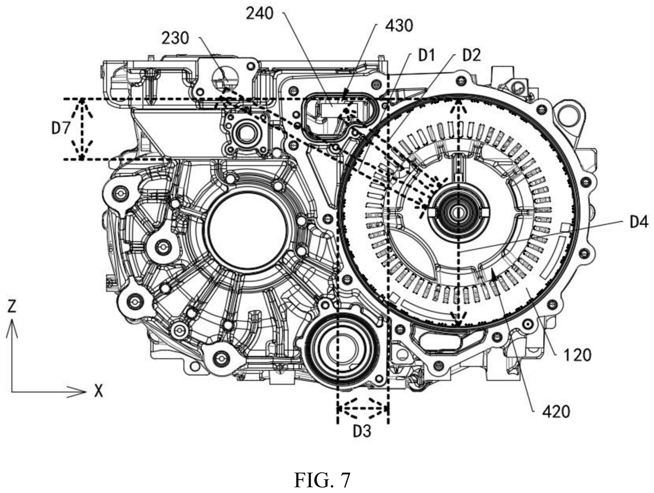

FIG. 7 is a diagram of a partial structure of the oil-cooled powertrain 10 according to an embodiment of this application. In an embodiment, in a radial direction R of the motor, a spacing between the power module 230 and the motor shaft 140 is greater than a spacing between the copper bar component 240 and the motor shaft 140. The radial direction R of the motor is a radial direction of the motor shaft 140. In this embodiment of this application, in the radial direction R of the motor, the spacing between the power module 230 and the motor shaft 140 is D1, the spacing between the copper bar component 240 and the motor shaft 140 is D2, and D1>D2 is set. In other words, the copper bar component 240 is closer to the motor shaft 140 than the power module 230. This helps shorten a spacing between the copper bar component 240 and the wiring terminal of the motor winding 130. Because there is an electrical connection relationship between the copper bar component 240 and the wiring terminal of the motor winding 130, the spacing between the copper bar component 240 and the wiring terminal of the motor winding 130 is set to be small, so that a layout complies with a flow direction of a power flow, and an energy loss is reduced. This solution further helps reduce a space volume occupied by the motor control unit 200 and the motor 100, improves integration of the oil-cooled powertrain 10, and increases the power density of the oil-cooled powertrain 10.

It should be understood that FIG. 7 and related description content schematically describe layout designs of positions and spacings and structure designs of shapes and sizes of main components such as the motor shaft 140, the power module 230, and the copper bar component 240 in the oil-cooled powertrain 10. For a layout design and a structure design of another component in the oil-cooled powertrain 10, refer to figures in embodiments of this application. Details are not described again.

Still refer to FIG. 5. In an embodiment, the motor control unit 200 further includes a circuit board 250, and the circuit board 250 is electrically connected to the power module 230. In the second direction Z, the circuit board 250 is stacked above the capacitor module 220 and the power module 230, the copper bar component 240 and any one of the capacitor module 220, the power module 230, and the circuit board 250 do not overlap, and projections of the motor shaft 140 and any one of the capacitor module 220, the power module 230, and the circuit board 250 do not overlap.

In this embodiment of this application, because a surface of the circuit board 250 usually has a large area, compared with a solution in which the capacitor module 220, the power module 230, and the circuit board 250 are tiled in the third direction X or the first direction Y, in this solution, the circuit board 250, the power module 230, and the capacitor module 220 are sequentially stacked in the second direction Z. This further helps reduce a space volume occupied by the motor control unit 200.

In this embodiment of this application, the projections of the copper bar component 240 and any one of the capacitor module 220, the power module 230, and the circuit board 250 in the second direction Z do not overlap. In other words, the copper bar component 240 is not stacked with the capacitor module 220, the power module 230, and the circuit board 250 in the second direction Z. This reduces interference to signal quality of the circuit board 250 caused by power transmitted by the copper bar component 240.

The copper bar component 240 is electrically connected to the power module 230, and the copper bar component 240 is configured to transmit the alternating current output by the power module 230. The copper bar component 240 may be disposed on a side that is of the power module 230 and that is close to the motor shaft 140 in the third direction X, to properly arrange components inside the motor control unit 200. This avoids an excessively large size value of the motor control unit 200 in the second direction Z, and also facilitates electrical connection between the copper bar component 240 and the motor 100 configured to receive the alternating current, to comply with a flow direction of a power flow. In this embodiment of this application, the projections of the motor shaft 140 and any one of the capacitor module 220, the power module 230, and the circuit board 250 in the second direction Z do not overlap. This helps reduce a size value of the oil-cooled powertrain 10 in the second direction Z.

In an embodiment, the motor control unit 200 further includes a radiator 280, and the capacitor module 220, the radiator 280, the power module 230, and the circuit board 250 are stacked in the second direction Z. The radiator 280 is configured to dissipate heat for the power module 230. In this embodiment of this application, a layout design of components in the motor control unit 200 can reduce lengths in the first direction Y and the third direction X, so that a connection path between the capacitor module 220 and the power module 230 is shorter, and power transmission energy consumption is reduced.

Refer to FIG. 3 and FIG. 7. In an embodiment, in the third direction X, the projections of the motor shaft 140 and any one of the capacitor module 220, the power module 230, and the circuit board 250 do not overlap (as shown in FIG. 3 and FIG. 7). The control unit accommodating cavity 430 and the motor accommodating cavity 420 at least partially overlap in the third direction X (as shown in FIG. 3 and FIG. 7), and a length of an overlapping part of the control unit accommodating cavity 430 and the motor accommodating cavity 420 in the third direction X is less than an outer diameter of the motor stator 120 (as shown in FIG. 7). In this embodiment of this application, the projections of the motor shaft 140 and any one of the capacitor module 220, the power module 230, and the circuit board 250 in the third direction X do not overlap. This helps reduce a size value of the oil-cooled powertrain 10 in the third direction X. The control unit accommodating cavity 430 and the motor accommodating cavity 420 are arranged in the second direction Z, and partially overlap in the third direction X, so that a total size value of the motor control unit 200 and the motor 100 in the second direction Z is reduced. A size value of the overlapping part of the control unit accommodating cavity 430 and the motor accommodating cavity 420 in the third direction X is D3, the outer diameter of the motor stator 120 is D4, and the motor stator 120 is nested in the motor accommodating cavity 420 in a fastening manner. In this solution, D3<D4 is set, so that projections of the control unit accommodating cavity 430 and the motor accommodating cavity 420 in the third direction X do not completely overlap, and space may be provided for disposing another component or apparatus below the control unit accommodating cavity 430. This increases space utilization of the oil-cooled powertrain 10. In an embodiment, D3<0.5D4.

In an embodiment, the control unit accommodating cavity 430 and the motor accommodating cavity 420 at least partially overlap in the second direction Z (as shown in FIG. 3 and FIG. 7). A length D7 of an overlapping part of the control unit accommodating cavity 430 and the motor accommodating cavity 420 in the second direction Z is less than the outer diameter D4 of the motor stator 120. In an embodiment, D7<0.5D4.

Still refer to FIG. 5 and FIG. 25. In an embodiment, the power module 230 includes a plurality of bridge arm modules 231. The plurality of bridge arm modules 231 are configured to form an inverter circuit to convert the direct current into the alternating current. In the first direction Y, the plurality of bridge arm modules 231 are sequentially arranged adjacently, a projection of the plurality of bridge arm modules 231 does not overlap the projection of the alternating current output interface mounting hole 450, and the projection of the plurality of bridge arm modules 231 overlaps the projection of the direct current input interface mounting hole 440. In the second direction Z, the projection of the capacitor module 220 covers the projection of the plurality of bridge arm modules 231.

In this embodiment of this application, in the first direction Y, the projection of the direct current input interface mounting hole 440 and the projection of the alternating current output interface mounting hole 450 at most partially overlap, the capacitor module 220 is electrically connected to the battery pack 30 through the direct current input interface 270 in the direct current input interface mounting hole 440, and the capacitor module 220 and the power module 230 are stacked. In this solution, in the first direction Y, the projection of the plurality of bridge arm modules 231 overlaps the projection of the direct current input interface mounting hole 440, so that a path for transferring energy from the direct current input interface 270 in the direct current input interface mounting hole 440 to the bridge arm modules 231 is short. This helps reduce an energy loss.

In this embodiment of this application, the copper bar component 240 transmits the alternating current through the alternating current output interface 260 in the alternating current output interface mounting hole 450, and the projections of the copper bar component 240 and the bridge arm module 231 in the second direction Z do not overlap. In this solution, the projections of the plurality of bridge arm modules 231 and the alternating current output interface mounting hole 450 in the first direction Y do not overlap, to provide a basis for reducing an energy loss between the copper bar component 240 and the alternating current output interface 260. The capacitor module 220 and the power module 230 are stacked in the second direction Z. The projection of the capacitor module 220 in the second direction Z covers the projections of the plurality of bridge arm modules 231 in the second direction Z, so that the capacitor module 220 can support the bridge arm modules 231.

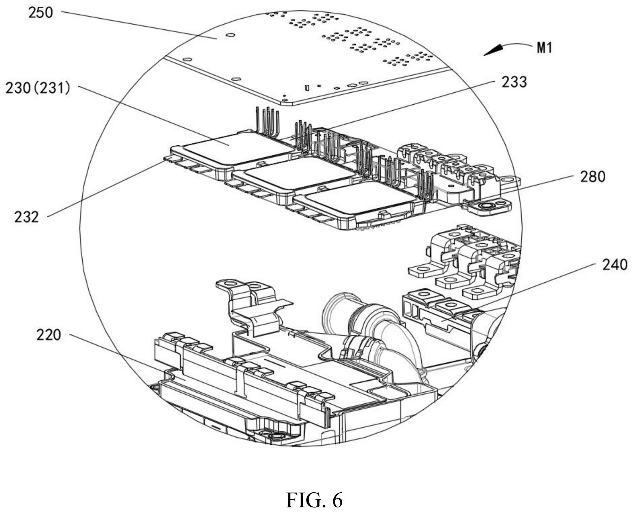

Still refer to FIG. 3, FIG. 5, and FIG. 6. FIG. 6 is a partial enlarged view of a part M1 in the powertrain 10 shown in FIG. 5. The direct current input interface mounting hole 440 is configured to fasten the direct current input interface 270, and the direct current input interface 270 is configured to connect to the battery pack 30 to receive the direct current. In an embodiment, two ends of each of the three bridge arm modules 231 are configured to electrically connect to a positive electrode and a negative electrode of the direct current input interface 270 via two first connectors 232 respectively, a bridge arm midpoint of each bridge arm module 231 is configured to connect to the copper bar component 240 via a second connector 233, and the three bridge arm modules 231 output a three-phase alternating current to the copper bar component 240 via the three second connectors 233. The two first connectors 232 are spaced from each other in the control unit accommodating cavity 430 in the first direction Y, and a projection of the two first connectors 232 in the first direction Y at least partially overlaps the projection of the direct current input interface mounting hole 440. The three second connectors 233 spaced from each other in the control unit accommodating cavity 430 in the first direction Y, and a projection of the three second connectors 233 in the first direction Y at least partially overlaps the projection of the alternating current output interface mounting hole 450.

In an embodiment, the power module 230 includes three bridge arm modules 231, and each bridge arm module 231 includes two first connectors 232 and one second connector 233, and the first connector 232 and the second connector 233 are respectively located on two sides of the bridge arm module 231 in the third direction X. The battery pack 30 transmits the direct current to the first connectors 232 of the three bridge arm modules 231 through the direct current input interface 270 and the capacitor module 220. The three bridge arm modules 231 convert the direct current into an alternating current, and then sequentially transmit the alternating current to the copper bar component 240 and the alternating current output interface 260 in the alternating current output interface mounting hole 450 via the second connectors 233.

In this embodiment of this application, the two first connectors 232 of each bridge arm module 231 are spaced from each other in the first direction Y, and projections of the first connector 232 and the direct current input interface 270 in the first direction Y at least partially overlap. Because there is an electrical connection relationship between the direct current input interface 270 and the first connectors 232, this solution helps shorten an energy transfer path between the direct current input interface 270 and the first connectors 232. The three second connectors 233 of the three bridge arm modules 231 are spaced from each other in the first direction Y, and projections of the second connector 233 and the alternating current output interface 260 in the first direction Y at least partially overlap. Because the second connectors 233 are electrically connected to the copper bar component 240 directly, and the alternating current is transmitted from the second connectors 233 to the alternating current output interface 260 in the alternating current output interface mounting hole 450 through the copper bar component 240, this solution further helps reduce an energy loss between the alternating current output interface 260 and the second connectors 233.

Still refer to FIG. 3. In an embodiment, the integrated housing 400 further includes a power interface mounting hole 460. The power interface mounting hole 460 is configured to fasten a power interface (not shown in the figure), and the power interface is configured to electrically connect to a one-phase winding of the motor 100 and an external power supply. In this embodiment of this application, the motor control unit 200 and the motor 100 in the powertrain 10 may form a voltage conversion circuit, and the voltage conversion circuit may receive, through the power interface, power supplied by the external power supply, and charge the battery pack 30. In an embodiment, a voltage of the external power supply is greater than a charging voltage of the battery pack 30, and the voltage conversion circuit including the motor control unit 200 and the motor 100 is configured to perform buck conversion. In an embodiment, a voltage of the external power supply is less than a charging voltage of the battery pack 30, and the voltage conversion circuit including the motor control unit 200 and the motor 100 is configured to perform boost conversion.

In an embodiment, a positive electrode of the power interface is configured to electrically connect to one phase of the copper bar component 240 and a positive electrode of the external power supply, and another negative electrode of the power interface is configured to electrically connect to a positive electrode of the battery pack 30 through the direct current input interface 270 in the direct current input interface mounting hole 440. In an embodiment, a negative electrode of the power interface is configured to electrically connect to one phase of the copper bar component 240 and a negative electrode of the external power supply, and another positive electrode of the power interface is configured to electrically connect to a positive electrode of the battery pack 30 through the direct current input interface 270 in the direct current input interface mounting hole 440.

In this embodiment of this application, the power interface mounting hole 460 penetrates the integrated housing 400 in the first direction Y and communicates with the control unit accommodating cavity 430, and the power interface mounting hole 460 and the direct current input interface mounting hole 440 are oppositely arranged in the first direction Y. In an embodiment, the external power supply charges the battery pack 30 through the power interface, the motor control unit 200, and the direct current input interface 270 in the direct current input interface mounting hole 440, and the power interface mounting hole 460 and the direct current input interface mounting hole 440 are oppositely arranged in the first direction Y. This helps shorten a transmission path between the power interface mounting hole 460 and the direct current input interface 270 in the direct current input interface mounting hole 440, and further reduces an energy loss in the charging process. In an embodiment, the power interface mounting hole 460 and the direct current input interface mounting hole 440 are oppositely arranged in the first direction Y, and the power interface mounting hole 460 and the alternating current output interface mounting hole 450 are spaced from each other in the third direction X. This facilitates electrical isolation.

Still refer to FIG. 3 and FIG. 7. In an embodiment, the alternating current output interface mounting hole 450 is located between the power interface mounting hole 460 and the motor shaft 140 in the second direction Z, the alternating current output interface mounting hole 450 is located between the power interface mounting hole 460 and the motor shaft 140 in the third direction X, and the third direction X is perpendicular to the first direction Y and the second direction Z. In this embodiment of this application, in the second direction Z and the third direction X, the alternating current output interface mounting hole 450 is closer to the motor 100 than the power interface mounting hole 460. Because there is an electrical connection relationship between the alternating current output interface 260 in the alternating current output interface mounting hole 450 and the wiring terminal of the motor winding 130, this solution helps shorten an energy transmission path, and a layout of the motor control unit 200 and the motor 100 is more compact, to help reduce a space volume of the powertrain 10 and increase power density.

Still refer to FIG. 3. In an embodiment, the alternating current output interface 260 is electrically connected to the input copper bar 1011 through the alternating current output interface 260 in the alternating current output interface mounting hole 450, the input copper bar 1011 is configured to electrically connect to the wiring terminal of the motor winding 130, and the input copper bar 1011 and the direct current input interface mounting hole 440 are oppositely arranged in the first direction Y. A height of an end that is of the input copper bar 1011 and that is close to the alternating current output interface mounting hole 450 in the second direction Z is greater than a height of an end that is of the input copper bar 1011 and that is connected to the wiring terminal of the motor winding 130, an extension direction of the input copper bar 1011 is perpendicular to the first direction Y, and an angle value of an included angle between the extension direction of the input copper bar and the second direction Z is less than 90°.

In this embodiment of this application, the alternating current output interface 260, the input copper bar 1011, and the wiring terminal of the motor winding 130 are electrically connected in sequence, and the alternating current output interface mounting hole 450 and the input copper bar 1011 are oppositely arranged in the first direction Y. This facilitates transmitting the alternating current output by the motor control unit 200 to the input copper bar 1011. The input copper bar 1011 includes a first end and a second end that are oppositely disposed. The first end of the input copper bar 1011 is configured to electrically connect to the alternating current output interface 260, and the second end of the input copper bar 1011 is configured to electrically connect to the wiring terminal of the motor winding 130. In the second direction Z, a spacing between the first end of the input copper bar 1011 and the alternating current output interface mounting hole 450 is less than a spacing between the first end of the input copper bar 1011 and the wiring terminal of the motor winding 130, a spacing between the second end of the input copper bar 1011 and the wiring terminal of the motor winding 130 is less than a spacing between the second end of the input copper bar 1011 and the alternating current output interface mounting hole 450. In other words, the extension direction of the input copper bar 1011 complies with a direction of a power flow in the alternating current output interface mounting hole 450, the input copper bar 1011, and the wiring terminal of the motor winding 130. Specifically, the angle value of the included angle between the extension direction of the input copper bar 1011 and the second direction Z is less than 90°. In this case, a loss of the alternating current transmitted between the motor control unit 200 and the motor 100 is small, so that the motor 100 can more efficiently drive the wheels to rotate. This enhances power performance of the vehicle.

Still refer to FIG. 2 and FIG. 3. In an embodiment, the reducer 300 and the alternating current output interface mounting hole 450 are oppositely arranged in the first direction Y (as shown in FIG. 2 and FIG. 3). The reducer 300 includes a wheel drive end 320 (as shown in FIG. 2), and the wheel drive end 320 is located below the direct current input interface mounting hole 440 and the alternating current output interface mounting hole 450 in the second direction Z (as shown in FIG. 2 and FIG. 3), an axis of the wheel drive end 320 is parallel to the motor shaft 140, and the axis of the wheel drive end 320 and the motor shaft 140 are arranged in a direction perpendicular to the first direction Y.

In this embodiment of this application, the reducer 300 is configured to: receive mechanical energy transmitted by the motor 100, and drive, through the wheel drive end 320, the wheel 40 to rotate. The control unit accommodating cavity 430 and the motor accommodating cavity 420 are arranged in the second direction Z, and partially overlap in the third direction X, so that the control unit accommodating cavity 430 has mounting space below the second direction Z. Because the wheel drive end 320 of the reducer 300 needs to be connected to the wheel, this solution helps provide mounting space for connecting the reducer 300 to the wheel 40. The axis of the wheel drive end 320 is parallel to the motor shaft 140, and a direction in which the axis of the wheel drive end 320 and the motor shaft 140 are arranged is perpendicular to the first direction Y, so that a layout of the motor 100 and the reducer 300 is compact and regular.

In this embodiment of this application, a power flow direction of the motor control unit 200 is opposite to an energy flowing direction of the motor 100, and power flow and energy flow approximately in a U shape. An energy flow direction from the motor 100 to the reducer 300 and an energy flow direction from the reducer 300 to the wheel drive end 320 are also opposite, and energy flows approximately in the U shape. A U-shaped opening in a U-shaped energy flow direction formed between the motor control unit 200 and the motor 100 is opposite to a U-shaped opening in a U-shaped energy flow direction formed between the motor 100, the reducer 300, and the wheel drive end 320. The wheel drive end 320 is located below the motor control unit 200, so that an entire energy flow of the oil-cooled powertrain 10 is smooth, and an energy path is short. This helps implement a small volume, space saving, higher integration, and miniaturization of the oil-cooled powertrain 10.

Still refer to FIG. 4. In an embodiment, the reducer accommodating cavity 410 communicates with the motor accommodating cavity 420 in the axial direction of the motor shaft 140, and the control unit accommodating cavity 430 does not communicate with the reducer accommodating cavity 410 and the motor accommodating cavity 420. In this embodiment of this application, there is a transmission relationship between the reducer 300 and the motor 100, and the reducer accommodating cavity 410 is disposed to communicate with the motor accommodating cavity 420, so that a part of the motor shaft 140 penetrates into the reducer accommodating cavity 410, and is configured to implement mechanical transmission between the motor 100 and the reducer 300. The control unit accommodating cavity 430 does not communicate with either of the reducer accommodating cavity 410 and the motor accommodating cavity 420, to prevent an oil cooling medium in the motor accommodating cavity 420 and the reducer accommodating cavity 410 from flowing into the control unit accommodating cavity 430, so that no electrical interference to an electrical component in the motor control unit 200 is caused, and normal operation of the motor control unit 200 is ensured.

In an embodiment, the integrated housing 400 further includes the reducer housing. The reducer housing forms the reducer accommodating cavity 410 through enclosing, or a part that is of the integrated housing 400 and that is forms the reducer accommodating cavity 410 through enclosing is the reducer housing.

Still refer to FIG. 3 and FIG. 4. In an embodiment, the control unit accommodating cavity 430, the motor accommodating cavity 420, and the reducer accommodating cavity 410 each have an opening communicating with the outside (as shown in FIG. 3 and FIG. 4). An orientation of the opening of the motor accommodating cavity 420 is opposite to an orientation of the opening of the reducer accommodating cavity 410 in the first direction Y (as shown in FIG. 3 and FIG. 4). The opening of the control unit accommodating cavity 430 is located between the opening of the motor accommodating cavity 420 and the opening of the reducer accommodating cavity 410 in the first direction Y (as shown in FIG. 3 and FIG. 4), and an orientation of the opening of the control unit accommodating cavity 430 is the second direction Z.

In an embodiment, the opening of the control unit accommodating cavity 430 is denoted as a motor control unit opening 431 (as shown in FIG. 3), the opening of the motor accommodating cavity 420 is denoted as a motor opening 421, and the opening of the reducer accommodating cavity 410 is denoted as a reducer opening 411 (as shown in FIG. 4). The orientation of the motor control unit opening 431 is the second direction Z, and the orientations of the motor opening 421 and the reducer opening 411 are opposite in the first direction Y. In this embodiment of this application, the motor control unit opening 431 is located between the motor opening 421 and the reducer opening 411 in the first direction Y, and the control unit accommodating cavity 430 is located between the opening of the motor accommodating cavity 420 and the opening of the reducer accommodating cavity 410 in the first direction Y, so that the control unit accommodating cavity 430, the motor accommodating cavity 420, and the reducer accommodating cavity 410 at least partially overlap in the first direction Y. This can reduce a size value of the oil-cooled powertrain 10 in the first direction Y, and helps implement a miniaturization design of the oil-cooled powertrain 10.

In an embodiment, the direct current input interface mounting hole 440 is located between the motor control unit opening 431 and the reducer opening 411 in the second direction Z (as shown in FIG. 3 and FIG. 4), and the alternating current output interface mounting hole 450 is located between the motor opening 421 and the motor control unit opening 431 in the second direction Z (as shown in FIG. 3). In this embodiment of this application, the direct current input interface mounting hole 440 and the reducer opening 411 are disposed on a same side, and the alternating current output interface mounting hole 450 and the motor opening 421 are disposed on a same side, so that two ends of the integrated housing 400 are basically flush with each other in the first direction Y, an internal layout of the oil-cooled powertrain 10 is regular, and an energy transfer path can be reduced.

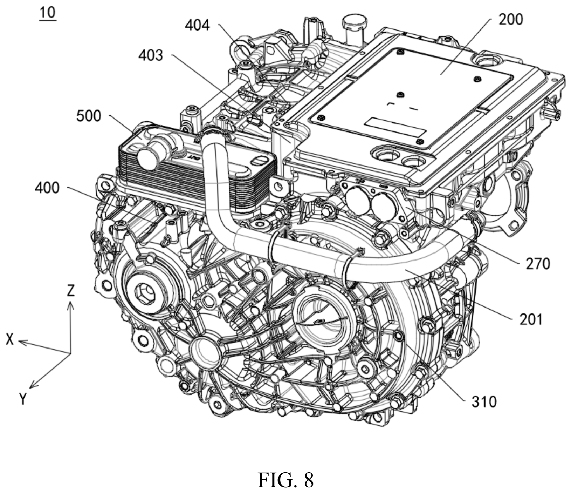

Refer to FIG. 2, FIG. 3, and FIG. 8. FIG. 8 is a diagram of a structure of the oil-cooled powertrain 10 according to an embodiment of this application. In an embodiment, the oil-cooled powertrain 10 further includes a motor end cover 110, a reducer end cover 310, and a motor control unit cover plate 210 (as shown in FIG. 2 and FIG. 8). The motor end cover 110, the reducer end cover 310, and the motor control unit cover plate 210 are respectively configured to cover the openings of the control unit accommodating cavity 430, the motor accommodating cavity 420, and the reducer accommodating cavity 410 (as shown in FIG. 2, FIG. 3, and FIG. 8). In this embodiment of this application, the motor end cover 110, the reducer end cover 310, and the motor control unit cover plate 210 can respectively protect internal components of the motor 100, the reducer 300, and the motor control unit 200, to prevent an external foreign matter from entering the control unit accommodating cavity 430, the motor accommodating cavity 420, and the reducer accommodating cavity 410.

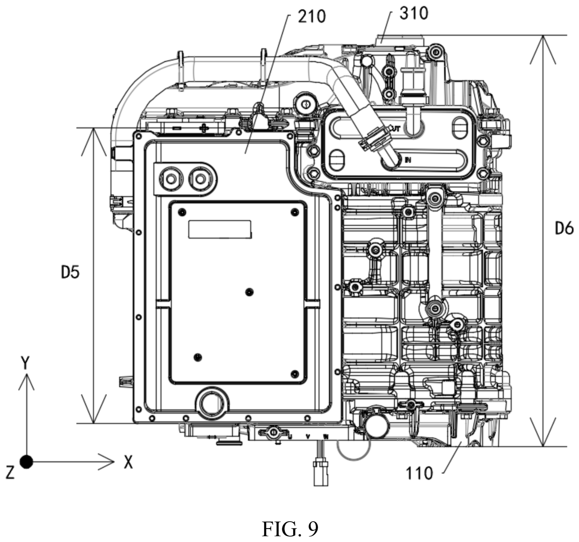

FIG. 9 is a top view of the oil-cooled powertrain 10 according to an embodiment of this application. In an embodiment, the motor end cover 110 and the reducer end cover 310 are oppositely arranged in the first direction Y (as shown in FIG. 9). A length of the motor control unit cover plate 210 in the first direction Y is less than a distance between the motor end cover 110 and the reducer end cover 310 in the first direction Y (as shown in FIG. 9). In the first direction Y, the motor control unit cover plate 210 is located between the motor end cover 110 and the reducer end cover 310. A length of the control unit accommodating cavity 430 in the first direction Y is less than a distance between the motor end cover 110 and the reducer end cover 310 in the first direction Y.

In this embodiment of this application, the motor control unit cover plate 210 covers the opening of the control unit accommodating cavity 430 in the second direction Z, and the motor end cover 110 and the reducer end cover 310 respectively cover openings of the motor 100 and the reducer 300 in the first direction Y. A position relationship between the motor control unit cover plate 210 and each of the motor end cover 110 and the reducer end cover 310 is similar to a position relationship between the motor control unit opening 431 and each of the motor opening 421 and the reducer opening 411. A value of the length of the motor control unit cover plate 210 in the first direction Y is D5 (as shown in FIG. 9), a value of a length between the motor end cover 110 and the reducer end cover 310 in the first direction Y is D6, and D5<D6 is set. In other words, the motor control unit cover plate 210 is located between the motor end cover 110 and the reducer end cover 310 in the first direction Y. This helps reduce a value of a total size of the motor control unit 200, the motor 100, and the reducer 300 in the first direction Y, and further reduces a space volume occupied by the oil-cooled powertrain 10 in the electric vehicle 1. The length of the control unit accommodating cavity 430 in the first direction Y is less than the distance between the motor end cover 110 and the reducer end cover 310 in the first direction Y. This can also reduce the volume of the oil-cooled powertrain 10.

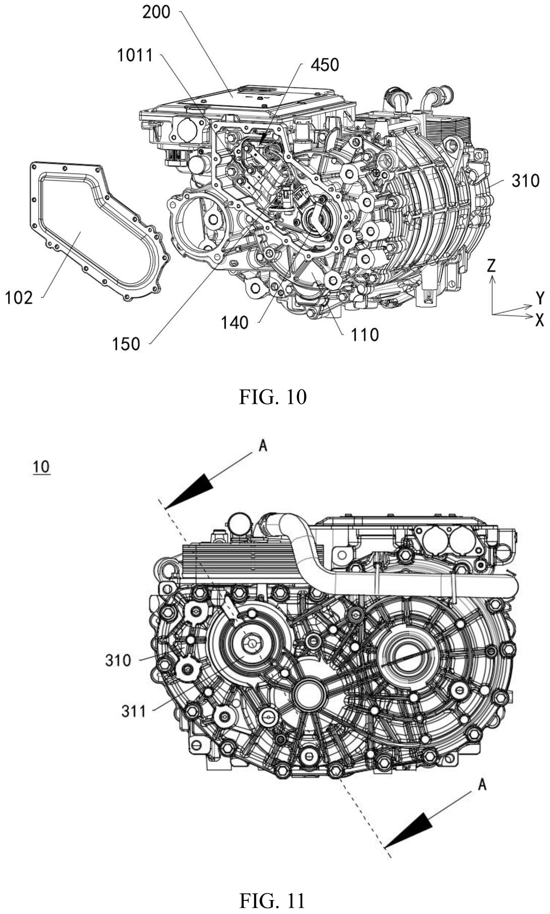

FIG. 10 is a partial exploded view of the oil-cooled powertrain 10 according to an embodiment of this application. In an embodiment, the motor control unit 200 is connected to the three input copper bars 1011 through the alternating current output interface 260 in the alternating current output interface mounting hole 450, the three input copper bars 1011 are configured to connect to the wiring terminal of the motor winding 130, the three input copper bars 1011 are located on an outer side of the motor end cover 110, and a direction in which the three input copper bars 1011 are arranged intersects both the first direction Y and the second direction Z. The oil-cooled powertrain 10 further includes a wiring cover plate 102, the wiring cover plate 102 and the reducer end cover 310 are oppositely disposed in the first direction Y, and the wiring cover plate 102 covers the alternating current output interface mounting hole 450, the three input copper bars 1011, the wiring terminal of the motor winding 130, and an end part of the motor shaft 140 in the first direction Y.

In this embodiment of this application, two ends of the input copper bar 1011 are respectively connected to the alternating current output interface 260 in the alternating current output interface mounting hole 450 and the wiring terminal of the motor winding 130, and the input copper bar 1011 is configured to transmit, to the motor 100, the alternating current output by the motor control unit 200. Both the alternating current output interface mounting hole 450 and the three input copper bars 1011 are located on the outer side of the motor end cover 110. The wiring terminal of the motor winding 130 and one end of the motor shaft 140 extend from the motor accommodating cavity 420 to the motor end cover 110. The wiring cover plate 102 can be configured to cover the alternating current output interface mounting hole 450, the three input copper bars 1011, the wiring terminal of the motor winding 130, and the end part of the motor shaft 140. The alternating current output interface 260 in the alternating current output interface mounting hole 450, the three input copper bars 1011, and the wiring terminal of the motor winding 130 are electrically connected to each other. The wiring cover plate 102 is disposed, to prevent an electrical connection relationship from being affected by an external relationship. The wiring cover plate 102 can also prevent a foreign matter from entering the motor shaft 140, to ensure normal operation of the motor 100.

Still refer to FIG. 3. In an embodiment, the integrated housing 400 further includes a coolant inlet 401 and a liquid cooling channel. The coolant inlet 401 is configured to convey a coolant to the liquid cooling channel. The coolant inlet 401 and the direct current input interface mounting hole 440 are oppositely arranged in the first direction Y, and an axial direction of the coolant inlet 401 is the same as the first direction Y. In the second direction Z, the liquid cooling channel is located below the control unit accommodating cavity 430.

In this embodiment of this application, the coolant enters the liquid cooling channel below the control unit accommodating cavity 430 through the coolant inlet 401. The motor control unit 200 generates a large amount of heat during operation. In this solution, the coolant inlet 401 and the liquid cooling channel are disposed, so that the coolant can cool and dissipate heat for the motor control unit 200. This helps reduce a temperature of the motor control unit 200 in a stable operating state. The coolant inlet 401 and the direct current input interface mounting hole 440 are oppositely arranged in the first direction Y. This helps reduce an operation difficulty of electrical connection and mechanical connection, avoids adverse impact of the coolant on the direct current input interface 270, and improves safety performance of the motor control unit 200 and the oil-cooled powertrain 10. In addition, the axial direction of the coolant inlet 401 is the same as the first direction Y, in other words, a flow direction of the coolant is opposite to a flow direction of the power flow in the motor control unit 200. This helps improve heat dissipation efficiency of the coolant. In the second direction Z, the liquid cooling channel is located below the control unit accommodating cavity 430, to properly use internal space of the motor control unit 200.

In an embodiment, the coolant includes water, glycol coolant, a propylene glycol coolant, and the like. For example, the coolant is water.

Still refer to FIG. 2 and FIG. 5. In an embodiment, the integrated housing 400 further includes a coolant outlet 402 (as shown in FIG. 2), and an axial direction of the coolant outlet 402 is perpendicular to both the first direction Y and the second direction Z. The coolant outlet 402, the circuit board 250, and the motor shaft 140 are arranged in the axial direction of the coolant outlet 402 (as shown in FIG. 5), and the coolant outlet 402 communicates with a heat exchanger 500 through a conduit (as shown in FIG. 2 and FIG. 5). The heat exchanger 500 and the wiring terminal of the motor 100 are oppositely disposed in the first direction Y (as shown in FIG. 5). In this embodiment of this application, the axial direction of the coolant outlet 402 is the third direction X, and the coolant outlet 402 and the direct current input interface mounting hole 440 are disposed on different sides. This can avoid negative impact of the coolant on the direct current input interface 270, and helps improve safety performance. The heat exchanger 500 and the wiring terminal of the motor 100 are oppositely disposed in the first direction Y. In other words, the heat exchanger 500 is closer to the coolant outlet 402 than the coolant inlet 401. This helps shorten a transmission path of the coolant on the outer side of the motor control unit 200, and improves cooling efficiency of the coolant.

In the second direction Z, the heat exchanger 500 is located above the reducer 300 (as shown in FIG. 2). The heat exchanger 500 is further configured to communicate the reducer accommodating cavity 410 and the motor accommodating cavity 420, the reducer accommodating cavity 410 is configured to accommodate the reducer 300, and the motor accommodating cavity 420 is configured to accommodate the motor 100. Neither the reducer accommodating cavity 410 nor the motor accommodating cavity 420 communicates with the liquid cooling channel. In this embodiment of this application, the heat exchanger 500 is disposed in the oil-cooled powertrain 10, and the heat exchanger 500 communicates with the reducer accommodating cavity 410 and the motor accommodating cavity 420, so that the reducer 300 and the motor 100 can also be cooled. This helps ensure that the reducer 300 and the motor 100 operate at an appropriate temperature. The heat exchanger 500 is located above the reducer 300 in the second direction Z, so that a cooling path between the heat exchanger 500 and the reducer 300 is short, and thermal resistance of a heat dissipation path can be reduced. The liquid cooling channel does not communicate with either the reducer accommodating cavity 410 or the motor accommodating cavity 420, so that the coolant in the liquid cooling channel does not flow into the reducer 300 and the motor 100.

In an embodiment, the heat exchanger 500 includes a liquid cooling inlet 510 and a liquid cooling outlet 520. The liquid cooling inlet 510 is connected to the coolant outlet 402 via a conduit 201, and the liquid cooling outlet 520 is configured to communicate with a cooling system. For example, the liquid cooling outlet 520 is configured to communicate with a cooling system in the vehicle. The cooling system is configured to cool the coolant heated in the heat exchanger 500 and then make a heated coolant enter the liquid cooling channel from the coolant inlet 401 to dissipate heat for the motor control unit 200.

In an embodiment, the heat exchanger 500 includes a first heat exchange chamber and a second heat exchange chamber (not shown in the figure) that are spaced from each other, the first heat exchange chamber and the second heat exchange chamber are thermally connected to each other, and a coolant in the second heat exchange chamber is different from a coolant in the first heat exchange chamber. For example, the coolant in the first heat exchange chamber is cooling water, and the coolant in the second heat exchange chamber is cooling oil. The first heat exchange chamber communicates with the coolant outlet 402, so that cooling water flowing out of the liquid cooling channel flows into the first heat exchange chamber. The second heat exchange chamber communicates with the motor accommodating cavity 420 and the reducer accommodating cavity 410, and cooling oil for cooling the motor 100 and the reducer 300 enters the second heat exchange chamber. The cooling water in the first heat exchange chamber cools the cooling oil in the second heat exchange chamber, so that cooled cooling oil enters the motor accommodating cavity 420 and the reducer accommodating cavity 410 again, the cooling water in the first heat exchange chamber is heated after absorbing heat of the cooling oil in the second heat exchange chamber, and heated cooling water is discharged from the coolant outlet.

Still refer to FIG. 8. In an embodiment, the control unit housing includes an indentation part 403, the indentation part 403 is located between the motor shaft 140 and the direct current input interface 270, and the indentation part 403 and the alternating current output interface 260 are oppositely disposed in the first direction Y. A part of the heat exchanger 500 is located in avoidance space formed by the indentation part 403. This solution can reduce a size of the oil-cooled powertrain 10 in the third direction X, and helps reduce a volume of the oil-cooled powertrain 10.

Still refer to FIG. 8. In an embodiment, a reinforcing rib 404 is disposed between the motor 100 and a side that is of the motor control unit 200 and that is close to the motor 100 in the third direction X, the reinforcing rib 404 extends in the third direction X, and the motor control unit 200, the reinforcing rib 404, and the motor 100 are integrally formed. This solution helps improve structural strength of the oil-cooled powertrain 10.

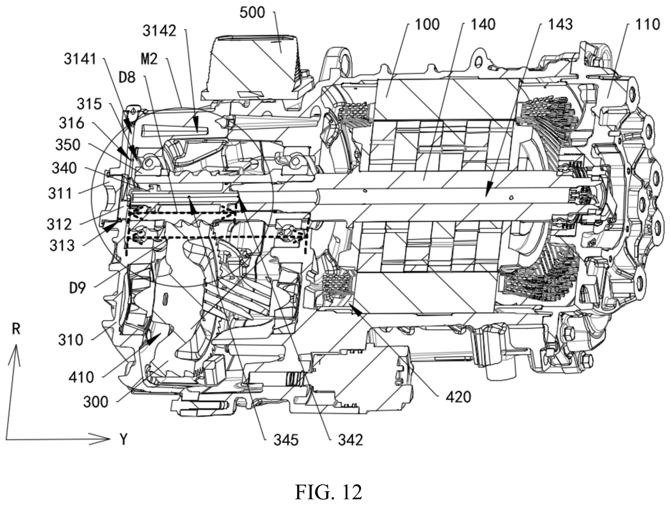

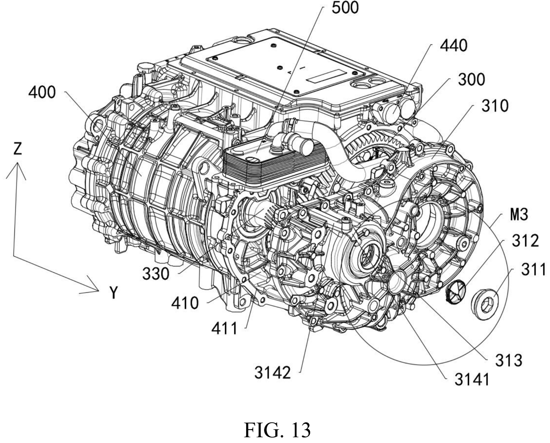

Refer to FIG. 11 to FIG. 13. FIG. 11 is a diagram of a structure of the oil-cooled powertrain 10 according to an embodiment of this application, FIG. 12 is a sectional view of the oil-cooled powertrain 10 shown in FIG. 11 along AA, and FIG. 13 is a partial exploded view of the oil-cooled powertrain 10 according to an embodiment of this application.

In an embodiment, the heat exchanger 500 is configured to input cooling oil into the reducer 300. The reducer 300 includes a reducer input shaft 330 (as shown in FIG. 12 and FIG. 13). The reducer end cover 310 includes a blocking member 311, an oil guide member 312, and a fastening hole 313 that penetrates the reducer end cover 310 in the first direction Y (as shown in FIG. 12 and FIG. 13). The blocking member 311 and the oil guide member 312 are located in the fastening hole 313 (as shown in FIG. 12 and FIG. 13), and the blocking member 311 is fastened in the fastening hole 313 (as shown in FIG. 12 and FIG. 13). The reducer input shaft 330 is located in the reducer accommodating cavity 410 and is configured to be fastened to the motor shaft 140 of the motor 100 (as shown in FIG. 12). The blocking member 311, the oil guide member 312, and the reducer input shaft 330 are sequentially arranged in the first direction Y (as shown in FIG. 12). The blocking member 311 and the oil guide member 312 are spaced from each other in the first direction Y (not shown in the figure), and the oil guide member 312 is configured to convey the cooling oil to the reducer input shaft 330.

In an embodiment, the oil guide member 312 is configured to guide the cooling oil from the outside of the reducer accommodating cavity 410 into the reducer accommodating cavity 410. In an embodiment, the cooling oil includes glycol cooling oil, synthetic oil, mineral oil, and the like. For example, the cooling oil is glycol cooling oil. The first direction Y is parallel to the axial direction of the motor shaft 140 and an axial direction of the reducer input shaft 330.

In this embodiment of this application, the blocking member 311 and the oil guide member 312 in the reducer end cover 310 are located in the fastening hole 313, and the blocking member 311, the oil guide member 312, and the reducer input shaft 330 are sequentially arranged in the first direction Y. In other words, the blocking member 311 is closer to the outside of the reducer 300 than the oil guide member 312. The blocking member 311 fastened in the fastening hole 313 can prevent the oil guide member 312 from deviating greatly in the first direction Y, to ensure that the oil guide member 312 can stably guide the cooling oil. The oil guide member 312 communicates with the reducer accommodating cavity 410, and the cooling oil flows into the reducer accommodating cavity 410 via the oil guide member 312, to cool and dissipate heat for the reducer 300 in the reducer accommodating cavity 410. This ensures that a component inside the oil-cooled powertrain 10 operates within an appropriate temperature range.

In an embodiment, there is a gap between the blocking member 311 and the oil guide member 312, to allow a small degree of movement between the blocking member 311 and the oil guide member 312 in the first direction Y, so that fracturing can be effectively prevented.

In this embodiment of this application, the blocking member 311 and the oil guide member 312 are combined to guide the cooling oil into the reducer 300. If the blocking member 311 and the oil guide member 312 are combined into an integrated structure, for example, a structure for flow guiding is processed in the blocking member 311, a structure of the blocking member 311 is excessively complex, and a processing difficulty is increased. When the blocking member 311 is fastened to the reducer end cover 310, a large pre-tightening force usually needs to be applied. As a result, the flow guide structure in the blocking member 311 is prone to deformation due to the force, and flow guide effect is affected. However, in this embodiment of this application, the structure for flow guiding is disposed as the blocking member 311 and the oil guide member 312. This helps reduce the processing difficulty and manufacturing costs of the components. In addition, the blocking member 311 and the oil guide member 312 are two separate and independent components, and are spaced from each other. This can effectively reduce an acting force and wear on the oil guide member 312, prolong a service life, and ensure flow guide effect of the oil guide member 312.

In this embodiment of this application, the oil guide member 312 can guide the cooling oil into the oil-cooled powertrain 10, to reduce a temperature of the oil-cooled powertrain 10 in a stable operating state. This helps improve work efficiency of the oil-cooled powertrain 10 and prolong a service life of the oil-cooled powertrain 10. The blocking member 311 and the oil guide member 312 are separately disposed components. Therefore, a structure is simplified in comparison with the integrated structure, and it is easier to separately process the blocking member 311 and the oil guide member 312. This helps reduce a processing difficulty and costs. The blocking member 311 and the oil guide member 312 are separately disposed. This can effectively reduce an acting force and wear on the oil guide member 312, prolong a service life, and ensure flow guide effect of the oil guide member 312.

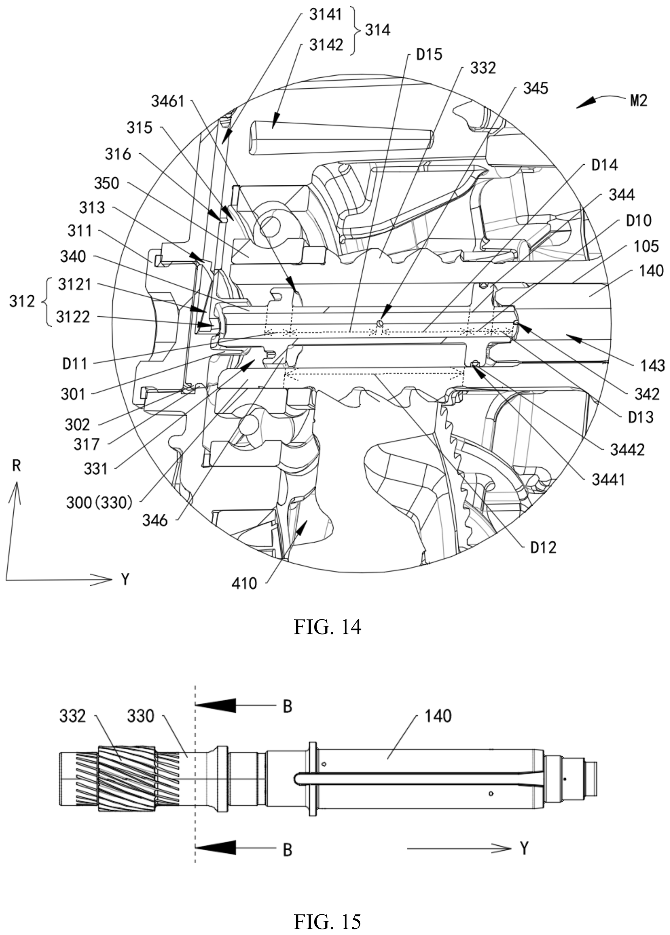

Refer to FIG. 12 and FIG. 14. FIG. 14 is a partial enlarged view of a part M2 in the oil-cooled powertrain 10 shown in FIG. 12. In an embodiment, the oil guide member 312 includes a radial oil channel of the oil guide member 3121 and an axial oil channel of the oil guide member 3122 that communicate with each other (as shown in FIG. 14). An extension direction of the radial oil channel of the oil guide member 3121 intersects with an extension direction of the axial oil channel of the oil guide member 3122 (as shown in FIG. 14). The radial oil channel of the oil guide member 3121 is configured to communicate with the heat exchanger 500 (as shown in FIG. 12 and FIG. 14), and the axial oil channel of the oil guide member 3122 is configured to communicate with the reducer accommodating cavity 410 through the reducer input shaft 330 (as shown in FIG. 14). The extension direction of the radial oil channel of the oil guide member 3121 is parallel to a radial direction R of the reducer input shaft 330, the extension direction of the axial oil channel of the oil guide member 3122 is parallel to the axial direction of the reducer input shaft 330, and the axial oil channel of the oil guide member 3122 and the reducer input shaft 330 are spaced from each other in the first direction Y.

In this embodiment of this application, the heat exchanger 500 is configured to input cooling oil into the oil-cooled powertrain 10, and the cooling oil sequentially flows through the radial oil channel of the oil guide member 3121, the axial oil channel of the oil guide member 3122, and the reducer input shaft 330, and then flows to the reducer accommodating cavity 410. The oil guide member 312 communicates with the reducer input shaft 330 through the axial oil channel of the oil guide member 3122, and the extension direction of the axial oil channel of the oil guide member 3122 is parallel to the axial direction of the reducer input shaft 330, in other words, the axial oil channel of the oil guide member 3122 extends in the first direction Y. This helps reduce flow resistance of the cooling oil in the oil guide member 312 and the reducer input shaft 330, and further improves cooling efficiency.

In this embodiment of this application, the axial oil channel of the oil guide member 3122 and the reducer input shaft 330 are spaced from each other in the first direction Y, so that the reducer input shaft 330 is isolated from the oil guide member 312. This facilitates rotation of the reducer input shaft 330, and reduces friction between the reducer input shaft 330 and the oil guide member 312.

Still refer to FIG. 11 and FIG. 12. In an embodiment, the reducer input shaft 330 is fastened to the motor shaft 140, the reducer input shaft 330 includes a reducer shaft cavity 331 (as shown in FIG. 14), and the motor shaft 140 includes a motor shaft cavity 143. The reducer 300 further includes an oil through pipe 340. The reducer shaft cavity 331 is configured to accommodate the oil through pipe 340 and a part of the motor shaft 140. The oil through pipe 340 is configured to communicate the oil guide member 312 and the motor shaft cavity 143. The oil through pipe 340 and the motor shaft 140 are arranged in the axial direction Y of the motor, and the oil through pipe 340 and the reducer input shaft 330 are oppositely fastened. In the first direction Y, the reducer shaft cavity 331 penetrates the reducer input shaft 330, and the motor shaft cavity 143 penetrates the motor shaft 140. The oil through pipe 340, the oil guide member 312, and the blocking member 311 are spaced from each other in the first direction Y.

In this embodiment of this application, both the reducer shaft cavity 331 and the motor shaft cavity 143 extend in the first direction Y, the oil through pipe 340 is located in the reducer shaft cavity 331 and is located on a side that is of the oil guide member 312 and that is away from the blocking member 311 in the first direction Y, and the oil through pipe 340 communicates with the reducer accommodating cavity 410 through the reducer shaft cavity 331. The oil guide member 312 communicates with the reducer accommodating cavity 410 through the reducer input shaft 330. The axial oil channel of the oil guide member 3122 communicates with the motor shaft cavity 143 through the oil through pipe 340. The cooling oil may sequentially cool the reducer shaft cavity 331 and the motor shaft cavity 143 through the oil guide member 312 and the oil through pipe 340, to provide a basis for subsequently cooling an internal structure of the motor 100, and expands a cooling range of the cooling oil inside the oil-cooled powertrain 10. The oil through pipe 340 and the reducer input shaft 330 are oppositely fastened. Even if the reducer input shaft 330 rotates at a high speed, the oil through pipe 340 can also stably transmit the cooling oil to the motor shaft cavity 143.

In this embodiment of this application, the blocking member 311, the oil guide member 312, and the oil through pipe 340 are spaced from each other in the first direction Y, and the blocking member 311 is fastened in the fastening hole 313, so that the oil guide member 312 and the oil through pipe 340 can slightly displace in the first direction Y. This helps reduce wear between the blocking member 311 and the oil guide member 312 and between the oil guide member 312 and the oil through pipe 340, and prolongs a service life. The oil guide member 312 can also be prevented from being squeezed when the blocking member 311 is sealed and fastened in the fastening hole 313, so that the oil guide member 312 is not damaged.

In an embodiment, there is a gap between the axial oil channel of the oil guide member 3122 and the oil through pipe 340 in the first direction Y, and an inner diameter of the oil through pipe 340 is greater than an inner diameter of the axial oil channel of the oil guide member 3122, and a projection of the axial oil channel of the oil guide member 3122 in the first direction Y is located in a projection of the oil through pipe 340 in the first direction Y. The projection of the axial oil channel of the oil guide member 3122 in the first direction Y is a projection of a region, enclosed by an inner wall of the axial oil channel of the oil guide member 3122, in the first direction Y; and the projection of the oil through pipe 340 in the first direction Y is a projection of a region, enclosed by a pipe wall of the oil through pipe 340, in the first direction Y.

In this embodiment of this application, the axial oil channel of the oil guide member 3122 and the oil through pipe 340 are spaced from each other in the first direction Y, so that when the reducer input shaft 330 rotates at the high speed, the oil guide member 312 and the oil through pipe 340 can implement non-contact oil guide, to avoid the wear between the oil guide member 312 and the oil through pipe 340 and avoid heat caused by the wear, and the cooling oil can cool and dissipate heat for a heat emitting component inside the oil-cooled powertrain 10. Therefore, this implementation can reduce a failure risk of the oil guide member 312 and the oil through pipe 340, can increase utilization of the cooling oil, and enhance heat dissipation effect. In this embodiment of this application, in this solution, the inner diameter of the oil through pipe 340 is set to be greater than the inner diameter of the axial oil channel of the oil guide member 3122, and the projection of the oil through pipe 340 in the first direction Y covers the projection of the axial oil channel of the oil guide member 3122 in the first direction Y, so that the cooling oil encounters reduced flow resistance and an increased flow volume when flowing from the axial oil channel of the oil guide member 3122 to the oil through pipe 340. This helps improve cooling efficiency of the cooling oil.

If the oil through pipe 340 is not disposed in the reducer shaft cavity 331, even if the reducer shaft cavity 331 communicates with the motor shaft cavity 143, because there is still a distance between the motor shaft 140 and an end that is of the reducer input shaft 330 and that is close to the heat exchanger 500 in the axial direction Y of the motor, when the reducer input shaft 330 rotates, it is difficult for the cooling oil to accurately flow from the reducer shaft cavity 331 into the motor shaft cavity 143, in other words, a flow volume of the cooling oil entering the motor 100 is small. This negatively affects cooling effect of the cooling oil on the motor 100, and further interferes with temperature rise control on the oil-cooled powertrain 10. In this embodiment of this application, the oil through pipe 340 is configured to communicate the heat exchanger and the motor shaft 140, so that the cooling oil can be supplied to the motor shaft 140, to cool a component in the motor 100.

In this embodiment of this application, the oil through pipe 340 is disposed in the reducer shaft cavity 331, and the oil through pipe 340 communicates with the motor shaft cavity 143, so that the cooling oil can be accurately guided from the reducer shaft cavity 331 to the motor shaft cavity 143, to provide a basis for subsequently cooling the internal structure of the motor 100. The oil through pipe 340 and the reducer input shaft 330 are oppositely fastened. When the reducer input shaft 330 rotates at the high speed, the oil through pipe 340 can stably transmit the cooling oil. This helps meet a cooling requirement of the oil-cooled powertrain 10 in a high-speed working condition.

Still refer to FIG. 14. In an embodiment, the reducer 300 further includes a sleeve structure 301, and the sleeve structure 301 is configured to sleeve an outer peripheral side of the oil through pipe 340. The sleeve structure 301, the oil guide member 312, and the blocking member 311 are arranged in the first direction Y, and the sleeve structure 301 is fastened to the oil guide member 312. The projection of the axial oil channel of the oil guide member 3122 in the first direction Y is located in a projection of the sleeve structure 301 in the first direction Y. In the radial direction R of the reducer input shaft 330, there is a gap between an inner surface that is of the sleeve structure 301 and that faces the oil through pipe 340 and an outer surface that is of the oil through pipe 340 and that faces the sleeve structure 301.

In this embodiment of this application, the sleeve structure 301 is located on a surface that is of the oil guide member 312 and that faces the oil through pipe 340 in the first direction Y, and the sleeve structure 301 sleeves an outer side of the oil through pipe 340. In addition, in the radial direction R of the reducer input shaft 330, the sleeve structure 301 and the oil through pipe 340 are spaced from each other. This can reduce wear between the sleeve structure 301 and the oil through pipe 340, and prolong a service life of the oil guide member 312 and a service life of the oil through pipe 340.

Two ends of the sleeve structure 301 in the first direction Y respectively communicate with the axial oil channel of the oil guide member 3122 and the oil through pipe 340. Because a size of the axial oil channel of the oil guide member 3122 in the first direction Y is small, guide effect on a flow direction of the cooling oil is limited. In addition, the axial oil channel of the oil guide member 3122 and the oil through pipe 340 are spaced from each other in the first direction Y, and the sleeve structure 301 is disposed on a side that is of the axial oil channel of the oil guide member 3122 and that is close to the oil through pipe 340. When the reducer input shaft 330 rotates, a part of the cooling oil leaking from a gap between the axial oil channel of the oil guide member 3122 and the oil through pipe 340 can be reduced, and the sleeve structure 301 can guide the leaked cooling oil in a flow direction, so that the cooling oil finally enters the reducer shaft cavity 331. The increases an amount of cooling oil entering the reducer shaft cavity 331, and increases an amount of cooling oil entering the motor 100 from the reducer shaft cavity 331, thereby comprehensively improving cooling efficiency. In this solution, the sleeve structure 301 is disposed to further guide the flow direction of the cooling oil, thereby increasing utilization of the cooling oil.

In an embodiment, the oil guide member 312 and the sleeve structure 301 are integrally formed. This solution helps improve structural reliability of the oil guide member 312, and the oil guide member 312 can stably guide the flow direction of the cooling oil, thereby avoiding leakage of the cooling oil.

Still refer to FIG. 12 and FIG. 14. In an embodiment, a reducer end cover oil channel 314 (as shown in FIG. 14) is disposed in the reducer end cover 310, and the reducer end cover oil channel 314 is configured to communicate with the heat exchanger 500 to convey the cooling oil in the heat exchanger 500 (as shown in FIG. 12 and FIG. 14). The oil guide member 312 is configured to communicate with the reducer end cover oil channel 314 (as shown in FIG. 14). Projections of the reducer end cover oil channel 314 and the radial oil channel of the oil guide member 3121 in the radial direction R of the reducer input shaft 330 at least partially overlap.

In this embodiment of this application, two ends of the reducer end cover oil channel 314 respectively communicate with the heat exchanger 500 and the oil guide member 312, and the heat exchanger 500 conveys the cooling oil to the reducer end cover oil channel 314. Because the projections of the reducer end cover oil channel 314 and the radial oil channel of the oil guide member 3121 in the radial direction R of the reducer input shaft 330 at least partially overlap, the cooling oil can enter the radial oil channel of the oil guide member 3121 through the reducer end cover oil channel 314, and the reducer end cover oil channel 314 guides the cooling oil. The oil guide member 312 communicates with the reducer input shaft 330, the oil through pipe 340, and the motor shaft 140, the reducer input shaft 330 and the motor shaft 140 are hollowly disposed, the reducer end cover oil channel 314 further communicates with the inside of the motor shaft 140 through the reducer input shaft 330, the inside of the reducer input shaft 330 is configured to communicate with the reducer accommodating cavity 410, and the inside of the motor shaft 140 is used to communicate with the motor accommodating cavity 420. One channel of cooling oil output by the heat exchanger 500 enters the motor accommodating cavity 420 through the oil through pipe 340 and the motor shaft cavity 143, and the other channel of cooling oil enters the reducer accommodating cavity 410 through the oil through pipe 340, the motor shaft 140, and the reducer shaft cavity 331.

Still refer to FIG. 14. In an embodiment, the reducer end cover 310 further includes a reducer bearing lubricant hole 316, the reducer bearing lubricant hole 316 is configured to communicate the reducer end cover oil channel 314 and a reducer bearing chamber 315, the reducer end cover oil channel 314, the reducer bearing lubricant hole 316, and the reducer bearing chamber 315 are arranged in the first direction Y, and the reducer bearing lubricant hole 316 is spaced from the radial oil channel of the oil guide member 3121 in the radial direction R of the reducer input shaft 330.

The reducer input shaft 330 is rotatably connected to the reducer end cover 310 through a reducer bearing 350, the reducer bearing 350 is located in the reducer bearing chamber 315, and the reducer bearing chamber 315 is recessed in the first direction Y and toward a direction away from the reducer input shaft 330.

The reducer bearing 350 is configured to bear a load from the reducer input shaft 330, to reduce friction and ensure that the reducer 300 operates stably in a high-speed working condition. If the reducer bearing 350 is not lubricated sufficiently, the reducer bearing 350 may be ablated or damaged. In this embodiment of this application, the reducer end cover oil channel 314 and the reducer bearing 350 are spaced from each other, the reducer bearing lubricant hole 316 is disposed on a side wall that is of the reducer end cover oil channel 314 and that is close to the reducer bearing 350 in the first direction Y, and the reducer end cover oil channel 314, the reducer bearing lubricant hole 316, and the reducer bearing chamber 315 are arranged in the first direction Y, so that when cooling oil flows through the reducer end cover oil channel 314 from the heat exchanger 500, a part of the cooling oil enters the reducer bearing chamber 315 through the reducer bearing lubricant hole 316, to lubricate the reducer bearing 350. This avoids damage to the reducer bearing 350, prolongs a service life, and ensures long-term stable operation of the reducer 300. The reducer bearing lubricant hole 316 and the radial oil channel of the oil guide member 3121 are spaced from each other in the radial direction R of the reducer input shaft 330, so that cooling oil entering the radial oil channel of the oil guide member 3121 is not affected by the reducer bearing lubricant hole 316.

Still refer to FIG. 14. In an embodiment, projections of the reducer bearing lubricant hole 316 and the reducer bearing chamber 315 in the first direction Y at least partially overlap. In the radial direction R of the reducer input shaft 330, a distance between the reducer bearing lubricant hole 316 and an axis of the reducer input shaft 330 is less than an outer diameter of the reducer bearing chamber 315. Both a length of the reducer bearing lubricant hole 316 in the first direction Y and a length of the reducer bearing lubricant hole 316 in the radial direction R of the reducer input shaft 330 are less than a length of the reducer end cover oil channel 314 in the first direction Y.

In this embodiment of this application, the projection of the reducer bearing lubricant hole 316 in the first direction Y at least partially overlaps the projection of the reducer bearing chamber 315 in the first direction Y, so that the cooling oil can enter the reducer bearing chamber 315 through the reducer bearing lubricant hole 316, to lubricate the reducer bearing 350 in the reducer bearing chamber. In the radial direction R of the reducer input shaft 330, the distance between the reducer bearing lubricant hole 316 and the axis of the reducer input shaft 330 is less than the outer diameter of the reducer bearing chamber 315, to ensure that the cooling oil does not flow into a region other than the reducer bearing chamber 315 after flowing into the reducer bearing lubricant hole 316, and ensure cooling effect of the cooling oil on the reducer bearing 350. Both the length of the reducer bearing lubricant hole 316 in the first direction Y and the length of the reducer bearing lubricant hole 316 in the radial direction R of the reducer input shaft 330 are less than the length of the reducer end cover oil channel 314 in the first direction Y. This helps properly allocate a flow volume of the cooling oil, and avoids an excessively small amount of cooling oil flowing into the reducer input shaft 330 and the motor shaft 140. Therefore, cooling efficiency is not affected.

Still refer to FIG. 12 to FIG. 14. In an embodiment, the heat exchanger 500 and the reducer end cover 310 are arranged in the second direction Z (as shown in FIG. 13). The reducer end cover 310, the heat exchanger 500, and the motor 100 are arranged in the first direction Y. The reducer end cover oil channel 314 includes a radial oil channel of the reducer end cover 3141 and an axial oil channel of the reducer end cover 3142 (as shown in FIG. 14). The radial oil channel of the reducer end cover 3141 extends in the radial direction R of the reducer input shaft 330, and the axial oil channel of the reducer end cover 3142 extends in the axial direction of the reducer input shaft 330. The radial oil channel of the reducer end cover 3141 communicates with the axial oil channel of the reducer end cover 3142 (as shown in FIG. 14), the radial oil channel of the reducer end cover 3141 communicates with the heat exchanger 500 through the axial oil channel of the reducer end cover 3142 (as shown in FIG. 12 and FIG. 14), the radial oil channel of the reducer end cover 3141 is configured to connect to a radial flow guide channel (as shown in FIG. 14), and projections of the radial oil channel of the reducer end cover 3141 and the radial flow guide channel in the radial direction R of the reducer input shaft 330 at least partially overlap.

In this embodiment of this application, the heat exchanger 500, the axial oil channel of the reducer end cover 3142, and the radial oil channel of the reducer end cover 3141 sequentially communicate with each other. Because the radial oil channel of the reducer end cover 3141 is located at an edge of the reducer 300 in the first direction Y, if the axial oil channel of the reducer end cover 3142 is not disposed, the heat exchanger 500 needs to be disposed close to the edge of the reducer 300. As a result, the heat exchanger 500 easily falls. Therefore, this solution helps improve structural stability of the heat exchanger 500. The radial oil channel of the reducer end cover 3141 communicates with an oil guide channel in the oil guide member 312, and the oil guide channel includes the radial oil channel of the oil guide member 3121 and the axial oil channel of the oil guide member 3122 that communicate with each other. Projections of the radial oil channel of the reducer end cover 3141 and the radial oil channel of the oil guide member 3121 in the oil guide channel in the radial direction R of the reducer input shaft 330 at least partially overlap, so that cooling oil can flow into the radial oil channel of the oil guide member 3121 through the radial oil channel of the reducer end cover 3141.

In an embodiment, the heat exchanger 500 is separately spaced from the oil guide member 312 and the blocking member 311 in the first direction Y.

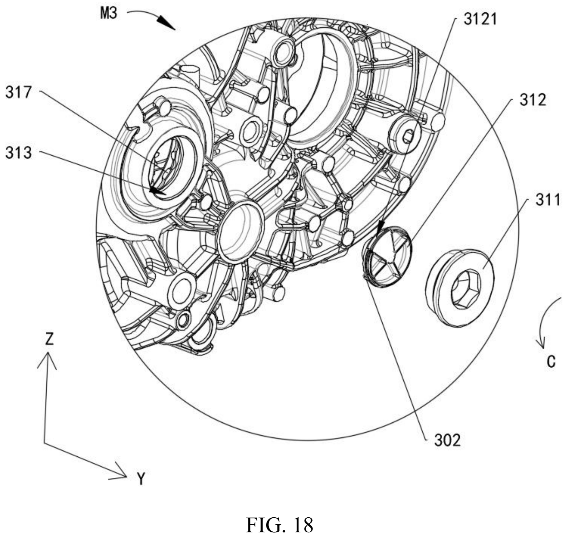

Refer to FIG. 14 and FIG. 18. FIG. 18 is a partial enlarged view of a part M3 in the oil-cooled powertrain 10 shown in FIG. 13. In an embodiment, the reducer end cover 310 further includes a first axial limiting boss 317 (as shown in FIG. 14 and FIG. 18). The first axial limiting boss 317 protrudes toward the oil guide member 312 from an inner surface of the fastening hole 313 in the radial direction R of the reducer input shaft 330 (as shown in FIG. 14 and FIG. 18). The reducer 300 further includes a second axial limiting boss 302 (as shown in FIG. 14 and FIG. 18). The second axial limiting boss 302 protrudes toward a hole wall of the fastening hole 313 from an outer circumferential surface of the oil guide member 312 in the radial direction R of the reducer input shaft 330 (as shown in FIG. 14 and FIG. 18).

In the first direction Y, the second axial limiting boss 302 is located between the blocking member 311 and the first axial limiting boss 317 (as shown in FIG. 14 and FIG. 18), and the first axial limiting boss 317 and the second axial limiting boss 302 are stacked in the first direction Y (as shown in FIG. 14), so that the oil guide member 312 is limited between the blocking member 311 and the first axial limiting boss 317 in the first direction Y.

In this embodiment of this application, both the blocking member 311 and the oil guide member 312 are located in the fastening hole 313, and the blocking member 311, the second axial limiting boss 302 of the oil guide member 312, and the first axial limiting boss 317 of the fastening hole 313 are sequentially arranged in the first direction Y. The first axial limiting boss 317 and the second axial limiting boss 302 overlap in the first direction Y, to limit movement of the oil guide member 312 away from the blocking member 311 in the first direction Y, that is, the blocking member 311 and the first axial limiting boss 317 are combined to implement axial limiting on the oil guide member 312. When an external force is applied to the oil-cooled powertrain 10, a position of the oil guide member 312 in the reducer 300 does not change greatly. In an embodiment, the second axial limiting boss 302 is spaced from the radial oil channel of the oil guide member 3121 in a circumferential direction C of the oil guide member 312 (as shown in FIG. 18). In this embodiment of this application, the second axial limiting boss 302 and the radial oil channel of the oil guide member 3121 are spaced from each other in the circumferential direction C of the oil guide member 312, so that circulation of cooling oil is not interfered with by the second axial limiting boss 302.

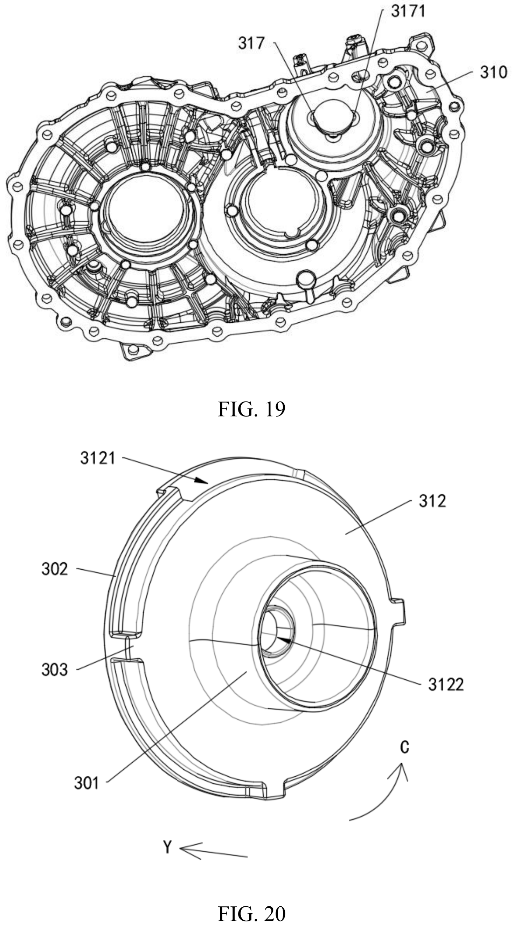

Refer to FIG. 19 and FIG. 20. FIG. 19 is a diagram of a structure of the reducer end cover 310 according to an embodiment of this application, and FIG. 20 is a diagram of a structure of the oil guide member 312 according to an embodiment of this application. In an embodiment, the first axial limiting boss 317 includes a circumferential limiting groove 3171 (as shown in FIG. 19). The circumferential limiting groove 3171 is recessed from an outer circumferential surface of the first axial limiting boss 317 to an inner surface of the fastening hole 313 in the radial direction R of the reducer input shaft 330 (as shown in FIG. 19). The reducer 300 further includes a circumferential limiting boss 303. The circumferential limiting boss 303 protrudes from an outer surface of the oil guide member 312 to the hole wall of the fastening hole 313 in the radial direction R of the reducer input shaft 330 (as shown in FIG. 20). The circumferential limiting boss 303 is located on a side that is of the second axial limiting boss 302 and that is close to the circumferential limiting groove 3171 in the first direction Y (as shown in FIG. 19 and FIG. 20). The circumferential limiting boss 303 is located on a side that is of the second axial limiting boss 302 and that is close to the reducer input shaft 330 in the first direction Y (as shown in FIG. 19 and FIG. 20). The circumferential limiting boss 303 is located in the circumferential limiting groove 3171 (as shown in FIG. 19 and FIG. 20).

In this embodiment of this application, a recess direction of the circumferential limiting groove 3171 is the same as a protrusion direction of the circumferential limiting boss 303, and the circumferential limiting groove 3171 fits the circumferential limiting boss 303, to circumferentially limiting the oil guide member 312, so that when the reducer 300 is in a high-speed working condition, the oil guide member 312 does not greatly rotate in the circumferential direction of the reducer input shaft 330. The circumferential limiting boss 303 is disposed close to the second axial limiting boss 302. When the circumferential limiting boss 303 is located in the circumferential limiting groove 3171, the first axial limiting boss 317 and the second axial limiting boss 302 are stacked in the first direction Y, to reduce amplitudes of displacement of the oil guide member 312 in the axial direction and the circumferential direction of the reducer input shaft 330, so as to ensure normal and stable operation of the reducer 300.

In an embodiment, in the circumferential direction of the reducer input shaft 330, a size value of a groove bottom of the circumferential limiting groove 3171 is greater than a size value of the circumferential limiting boss 303 (as shown in FIG. 19 and FIG. 20). In this embodiment of this application, a circumferential size value of the groove bottom of the circumferential limiting groove 3171 is greater than a circumferential size value of the circumferential limiting boss 303, so that the circumferential limiting boss 303 is mounted in the circumferential limiting groove 3171, and wear between the circumferential limiting boss 303 and the circumferential limiting groove 3171 can be reduced.

In an embodiment, the first axial limiting boss 317 is provided with a plurality of circumferential limiting grooves 3171 that are spaced from each other, the oil guide member 312 includes a plurality of circumferential limiting bosses 303, and a quantity of circumferential limiting grooves 3171 is equal to a quantity of circumferential limiting bosses 303. In this embodiment of this application, the plurality of circumferential limiting grooves 3171 fit the plurality of circumferential limiting bosses 303 respectively, to help enhance circumferential stability of the oil guide member 312 on the reducer input shaft 330.

In an embodiment, the second axial limiting boss 302 and the circumferential limiting boss 303 are integrally formed. This solution helps enhance structural strength of the second axial limiting boss 302 and the circumferential limiting boss 303. In addition, because there is no gap between the second axial limiting boss 302 and the circumferential limiting boss 303 in the first direction Y, the second axial limiting boss 302 and the first axial limiting boss 317 are more tightly stacked in the first direction Y. This helps enhance effect of axial limiting on the oil guide member 312.

In an embodiment, a material of the blocking member 311 is different from a material of the oil guide member 312. The material of the blocking member 311 is a metal material, and the material of the oil guide member 312 is a plastic material. In this embodiment of this application, the blocking member 311 and the oil guide member 312 play different roles. The blocking member 311 mainly plays a sealing role and an axial limiting role, and the material of the blocking member 311 needs to be rigid to some extent. The oil guide member 312 mainly guides a flow direction of the cooling oil, and the material of the oil guide member 312 needs to be easy to process. In this solution, the materials of the blocking member 311 and the oil guide member 312 are different, so that the blocking member 311 and the oil guide member 312 meet different use requirements. Specifically, the blocking member 311 is made of a metal material. This helps improve rigidity of the blocking member 311, and ensures that the cooling oil does not leak out of the oil-cooled powertrain 10 from the fastening hole 313. The oil guide member 312 is made of a plastic material. This helps reduce processing difficulties of the radial oil channel of the oil guide member 3121 and the axial oil channel of the oil guide member 3122 and manufacturing costs of the oil guide member 312.

In an embodiment, a melting point of the oil guide member 312 is less than 80°C. This solution helps ensure stability of the oil guide member 312.

In an embodiment, the blocking member 311 is sealed with and fastened to the inner wall of the fastening hole 313 in the reducer end cover 310 via a thread (not shown in the figure), so that the blocking member and the reducer end cover 310 are sealed and fastened. In this embodiment of this application, the blocking member 311 can limit movement of the oil guide member 312 close to the blocking member 311 in the first direction Y. In addition, because the blocking member 311 is connected to the fastening hole 313 in a sealing manner, the blocking member 311 can further seal the cooling oil, to prevent the cooling oil from leaking out of the oil-cooled powertrain 10 from the fastening hole 313. In this solution, a traditional complex structure of an end cover, a bolt, and a sealing ring is simplified into the blocking member 311 and the oil guide member 312. This reduces an assembly difficulty, and reduces costs.

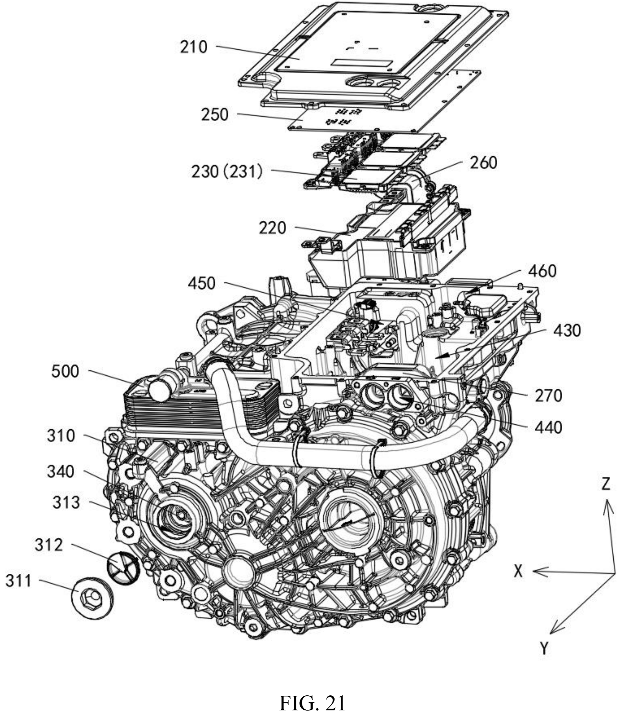

Refer to FIG. 3 and FIG. 21. FIG. 21 is a partial exploded view of the oil-cooled powertrain 10 according to an embodiment of this application. In an embodiment, the reducer end cover 310 and the alternating current output interface mounting hole 450 are oppositely arranged in the first direction Y (as shown in FIG. 3 and FIG. 21). The direct current input interface mounting hole 440 and the reducer end cover 310 are arranged on a same side (as shown in FIG. 21).

In this embodiment of this application, the direct current input interface mounting hole 440 and the alternating current output interface mounting hole 450 are oppositely disposed in the first direction Y. This helps avoid electrical interference between the direct current and the alternating current in the transmission process, and further improves the safety performance. In addition, the layout of the motor control unit 200 and the motor 100 is compact and regular. This helps reduce the volume of the oil-cooled powertrain 10, and optimizes the layout of the entire vehicle. In this embodiment of this application, a power transmission path between the motor control unit 200, the motor 100, and the reducer 300 is approximately U-shaped, and the direct current input interface mounting hole 440 and the reducer end cover 310 are arranged on a same side in the first direction Y, to comply with an energy transmission path. This helps reduce an energy loss.

Still refer to FIG. 21. In an embodiment, in the second direction Z, the blocking member 311 and the oil guide member 312 are located below the direct current input interface mounting hole 440. In the first direction Y, a distance between the direct current input interface mounting hole 440 and at least one of the blocking member 311 and the oil guide member 312 is less than a distance between the alternating current output interface mounting hole 450 and at least one of the blocking member 311 and the oil guide member 312. In this embodiment of this application, in the second direction Z, the reducer 300 is located below the motor control unit 200. The blocking member 311 and the oil guide member 312 are located below the direct current input interface mounting hole 440, and the blocking member 311 and the oil guide member 312 are closer to the direct current input interface mounting hole 440 than the alternating current output interface mounting hole 450 in the first direction Y, to comply with the U-shaped power transmission path between the motor 100, the motor control unit 200, and the reducer 300. In this solution, components inside the oil-cooled powertrain 10 are properly arranged. This helps reduce a total volume of the oil-cooled powertrain 10, and increases power density.

Still refer to FIG. 21. In an embodiment, the reducer end cover 310 and the control unit accommodating cavity 430 are arranged in the first direction Y, and projections of the blocking member 311 and either the capacitor module 220 or the power module 230 in the first direction Y do not overlap. In this embodiment of this application, if the projection of the blocking member 311 in the first direction Y at least partially overlaps the projections of the capacitor module 220 and the power module 230 in the first direction Y, the blocking member 311 occupies an adjacent region of the capacitor module 220 and the power module 230 in the first direction Y, resulting in interference to energy transfer of the motor control unit 200. In this solution, positions of the blocking member 311, the capacitor module 220, and the power module 230 are properly arranged, to ensure that both the reducer 300 and the motor control unit 200 operate normally and do not affect each other.

Still refer to FIG. 21. In an embodiment, in the first direction Y, the projection of either the blocking member 311 or the oil guide member 312 does not overlap a projection of the power interface mounting hole 460, so that the power interface mounting hole 460 is spaced from an oil channel of the reducer 300, or the control unit accommodating cavity in which the power interface mounting hole 460 is located is spaced from the oil guide member 312 and the blocking member 311, and that there is sufficient space around the power interface in the power interface mounting hole 460 to connect to a power cable. This facilitates charging operation. In this solution, positions of the blocking member 311, the oil guide member 312, and the power interface mounting hole 460 are properly arranged, to ensure that both the reducer 300 and the motor control unit 200 operate normally and do not affect each other.

Still refer to FIG. 21. In an embodiment, in the second direction Z and the third direction X, either the blocking member 311 or the oil guide member 312 is spaced from the power interface mounting hole 460. In this embodiment of this application, there is no energy transfer between the blocking member 311, the oil guide member 312, and the power interface mounting hole 460, and both the blocking member 311 and the oil guide member 312 are spaced from the power interface mounting hole 460 in the second direction Z and the third direction X, so that there is sufficient space around the power interface in the power interface mounting hole 460 to connect to a power cable, to facilitate charging operation.

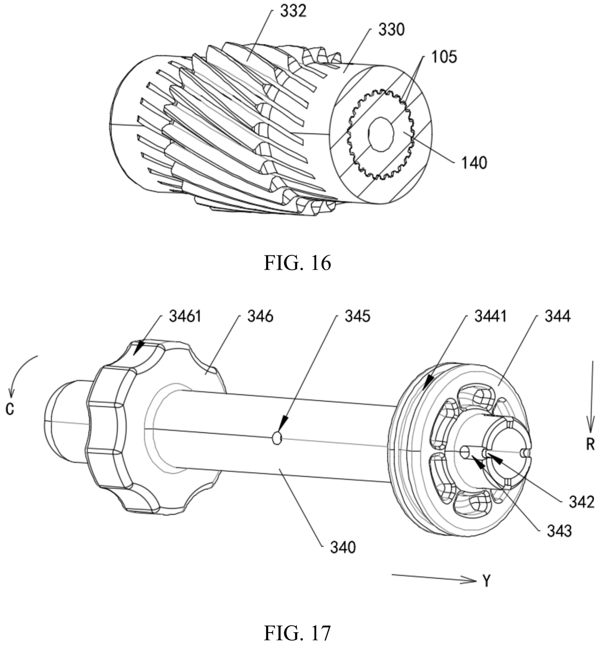

Refer to FIG. 12 and FIG. 15 to FIG. 17. FIG. 15 is a diagram of structures of the reducer input shaft 330 and the motor shaft 140 according to an embodiment of this application, FIG. 16 is a sectional view of the reducer input shaft 330 and the motor shaft 140 shown in FIG. 15 along BB, and FIG. 17 is a diagram of a structure of the oil through pipe 340 according to an embodiment of this application.

In an embodiment, in the radial direction R of the motor, the motor shaft 140 is fastened to the reducer input shaft 330 via a spline 105 (as shown in FIG. 12, FIG. 15, and FIG. 16). The oil through pipe 340 includes at least one spline lubricant hole 342 (as shown in FIG. 17). The motor shaft cavity 143 is configured to accommodate a part of the oil through pipe 340 (as shown in FIG. 12). In the radial direction R of the motor, projections of the oil through pipe 340, the motor shaft 140, and the reducer input shaft 330 partially overlap (as shown in FIG. 12). The spline lubricant hole 342 penetrates the oil through pipe 340 in the radial direction R of the motor (as shown in FIG. 17). In the radial direction R of the motor, projections of the spline lubricant hole 342, the motor shaft 140, and the reducer input shaft 330 partially overlap (as shown in FIG. 12 and FIG. 17). The radial direction R of the motor is the radial direction of the motor shaft 140.

In this embodiment of this application, splines 105 are correspondingly disposed on a part of an outer wall of the motor shaft 140 and a part of an inner wall of the reducer shaft cavity 331, and the spline of the motor shaft 140 fits the spline of the reducer shaft cavity 331, so that the motor shaft 140 can transfer torque to the reducer input shaft 330 via the spline 105, to implement transmission connection between the motor shaft 140 and the reducer input shaft 330. In the following implementation, the spline 105 may be the spline of the motor shaft 140, or the spline of the reducer input shaft 330, or both the spline of the motor shaft 140 and the spline of the reducer input shaft 330.

The spline 105 may be worn when the torque is transferred. The spline 105 needs to be properly lubricated, to avoid a failure. In this embodiment of this application, the oil through pipe 340 includes the at least one spline lubricant hole 342. The spline lubricant hole 342 is configured to transmit cooling oil to the spline 105. The spline lubricant hole 342 penetrates the motor shaft 140 in the radial direction R of the motor, and the projections of the spline lubricant hole 342, the motor shaft 140, and the reducer input shaft 330 in the radial direction R of the motor partially overlap, so that the cooling oil flowing into the oil through pipe 340 can flow to the splines 105 of the motor shaft 140 and the reducer input shaft 330 through the spline lubricant hole 342, to lubricate the splines 105 and reduce wear.

It should be noted that, in this embodiment of this application, the projection in the radial direction R of the motor is a projection in the radial direction R of the motor on a projection plane perpendicular to the radial direction R of the motor. The projection plane of the projection in the radial direction R of the motor is perpendicular to the radial direction R of the motor. The projection in the axial direction Y of the motor is a projection in the axial direction Y of the motor on a projection plane perpendicular to the axial direction Y of the motor. The projection plane of the projection in the axial direction Y of the motor is perpendicular to the axial direction Y of the motor.

In this embodiment of this application, projection planes of the projections of the oil through pipe 340, the spline lubricant hole 342, the motor shaft 140, and the reducer input shaft 330 in the radial direction R of the motor are the same.

In an embodiment, the spline lubricant hole 342 is disposed in a part that is of the oil through pipe 340 and that is located in the motor shaft cavity 143.

Still refer to FIG. 14 and FIG. 17. In an embodiment, the oil through pipe 340 includes at least one spline oil guide groove 343 (as shown in FIG. 17 and FIG. 14), and the spline oil guide groove 343 communicates with the spline lubricant hole 342 (as shown in FIG. 17). In the radial direction R of the motor, the spline oil guide groove 343 is recessed from an outer circumferential surface of the oil through pipe 340 and away from the reducer input shaft 330 (as shown in FIG. 17). In the axial direction Y of the motor, the spline lubricant hole 342 communicates with an end face of the oil through pipe 340 (as shown in FIG. 17). In the radial direction R of the motor, projections of the spline oil guide groove 343, the motor shaft 140, and the reducer input shaft 330 partially overlap (as shown in FIG. 17 and FIG. 14). The spline 105, the spline lubricant hole 342, and the spline oil guide groove 343 are arranged in the axial direction Y of the motor (as shown in FIG. 17 and FIG. 14), and the spline lubricant hole 342 and the spline oil guide groove 343 are adjacent in the axial direction Y of the motor (as shown in FIG. 17).

In this embodiment of this application, the spline lubricant hole 342 is located in the motor shaft cavity 143, and the spline lubricant hole 342 is mainly to guide the cooling oil to the outside of the oil through pipe 340. In this case, a flow direction of the cooling oil needs to be further guided, so that the cooling oil flowing out of the spline lubricant hole 342 flows to the spline 105 outside the motor shaft cavity 143. In this solution, the spline oil guide groove 343 is disposed in the oil through pipe 340. The spline oil guide groove 343 communicates with the spline lubricant hole 342, the spline lubricant hole 342 and the spline oil guide groove 343 are adjacently disposed in the axial direction Y of the motor, and the spline oil guide groove 343 is recessed away from the reducer input shaft 330 from the outer circumferential surface of the oil through pipe 340, so that the spline oil guide groove 343 can be configured to convey, to the spline 105, the cooling oil flowing out of the spline lubricant hole 342.

In this embodiment of this application, the spline lubricant hole 342 communicates with the end face of the oil through pipe 340 in the axial direction Y of the motor, and the spline lubricant hole 342 and the end face of the oil through pipe 340 form a groove. In some implementations, the spline lubricant hole 342 does not communicate with the end face of the oil through pipe 340 in the axial direction Y of the motor. In this case, the spline lubricant hole 342 is an independent through hole.

Still refer to FIG. 17. In an embodiment, the oil through pipe 340 includes a plurality of spline lubricant holes 342 and a plurality of spline oil guide grooves 343, and each spline lubricant hole 342 is adjacent to and communicates with one spline oil guide groove 343 in the axial direction Y of the motor. The plurality of spline lubricant holes 342 are spaced from each other in a circumferential direction C of the motor, and the plurality of spline oil guide grooves 343 are spaced from each other in the circumferential direction C of the motor. In the axial direction Y of the motor, an aperture of the spline lubricant hole 342 is less than a length of the spline oil guide groove 343. In the circumferential direction C of the motor, an aperture of the spline lubricant hole 342 is less than a width of the spline oil guide groove 343. The circumferential direction C of the motor is a circumferential direction of the motor shaft 140.

In this embodiment of this application, the plurality of spline lubricant holes 342 and the plurality of spline oil guide grooves 343 are correspondingly disposed in the oil through pipe 340, the plurality of spline lubricant holes 342 are spaced from each other in the circumferential direction C of the motor, and the plurality of spline oil guide grooves 343 are spaced from each other in the circumferential direction C of the motor, so that the cooling oil can flow from different positions to the spline 105 of the motor shaft 140 and the spline 105 of the reducer input shaft 330. This improves lubricating effect of the cooling oil on the spline 105, and avoids a failure of the spline 105.

In this embodiment of this application, in the axial direction Y of the motor, the aperture of the spline lubricant hole 342 is set to be less than the length of the spline oil guide groove 343, and the aperture of the spline lubricant hole 342 is small, to avoid an excessively large through hole disposed in the end face of the oil through pipe 340. This improves structural strength of the oil through pipe 340. In addition, the length of the spline oil guide groove 343 in the axial direction Y of the motor is large, to help the spline oil guide groove 343 guide a flow direction. If the length of the spline oil guide groove 343 is excessively small, it may be difficult for the cooling oil to flow to the spline 105. In the circumferential direction C of the motor, the width of the spline oil guide groove 343 is set to be greater than the aperture of the spline lubricant hole 342, to help reduce flow resistance of the cooling oil in the spline oil guide groove 343.

Still refer to FIG. 14 and FIG. 17. In an embodiment, the oil-cooled powertrain 10 further includes a first fastening structure 344 (as shown in FIG. 14 and FIG. 17), and the oil through pipe 340 is sealed with and fastened to an inner wall of the reducer shaft cavity 331 via the first fastening structure 344. In the radial direction R of the motor, the oil through pipe 340, the first fastening structure 344, and the reducer 300 are sequentially arranged (as shown in FIG. 14). In the axial direction Y of the motor, the motor shaft 140 and the first fastening structure 344 are spaced from each other (as shown in FIG. 14), the spline 105 and the first fastening structure 344 are spaced from each other (as shown in FIG. 14), and a distance between the motor shaft 140 and the first fastening structure 344 is less than a distance between the spline 105 and the first fastening structure 344. The spline lubricant hole 342, the spline oil guide groove 343, and the first fastening structure 344 are arranged in the axial direction Y of the motor (as shown in FIG. 17).

In this embodiment of this application, in the radial direction R of the motor, the first fastening structure 344 is located between the oil through pipe 340 and the reducer shaft cavity 331, and the oil through pipe 340 is fastened in the reducer shaft cavity 331 in the radial direction R of the motor via the first fastening structure 344. In an embodiment, the first fastening structure 344 is in interference fit with the inner wall of the reducer shaft cavity 331, to help keep the oil through pipe 340 and the reducer shaft cavity 331 oppositely fastened, so that the oil through pipe 340 can stably transmit the cooling oil. In the axial direction Y of the motor, the spline lubricant hole 342, the spline oil guide groove 343, and the first fastening structure 344 are arranged in the axial direction Y of the motor, and there are gaps between the first fastening structure 344 and the motor shaft 140 and between the first fastening structure 344 and the spline 105, so that the cooling oil flows through the spline lubricant hole 342 and the spline oil guide groove 343, and then flows to the splines 105 through the two gaps.

Still refer to FIG. 14. In this embodiment of this application, in the axial direction Y of the motor, the distance between the motor shaft 140 and the first fastening structure 344 is less than the distance between the spline 105 and the first fastening structure 344, and the distance between the motor shaft 140 and the first fastening structure 344 is a distance between the first fastening structure 344 and an end face that is of the motor shaft 140 and that is close to the first fastening structure 344. In the axial direction Y of the motor, the spline 105 is located on a side that is of the end face of the motor shaft 140 and that is away from the first fastening structure 344, and a flow direction of the cooling oil from the first fastening structure 344 to the spline 105 is the same as a direction in which the reducer 300 and the motor 100 are arranged, so that the cooling oil can further cool and lubricate another component in the motor 100 in the axial direction Y of the motor after flowing through the spline 105. This improves cooling effect on the motor 100.

In an embodiment, the oil through pipe 340 and the first fastening structure 344 are integrally formed. This solution can enhance stability of fastening the oil through pipe 340 and the reducer shaft cavity 331 in the radial direction R of the motor, and helps the first fastening structure 344 stably guide the cooling oil to flow to the spline 105.

Still refer to FIG. 14 and FIG. 17. In an embodiment, the first fastening structure 344 includes a sealing groove 3441 (as shown in FIG. 17), and the sealing groove 3441 is configured to accommodate a sealing ring 3442 (as shown in FIG. 14 and FIG. 17). The first fastening structure 344 and the reducer input shaft 330 are sealed with and fastened to each other via the sealing ring 3442. In the radial direction R of the motor, the sealing groove 3441 is recessed away from the reducer input shaft 330 from an outer circumferential surface of the first fastening structure 344 (as shown in FIG. 14 and FIG. 17). In the circumferential direction C of the motor, both the sealing groove 3441 and the first fastening structure 344 surround the oil through pipe 340 one round (as shown in FIG. 17).

In this embodiment of this application, the sealing groove 3441 is recessed toward the oil through pipe 340 in the radial direction R of the motor, the sealing ring 3442 is placed in the sealing groove 3441, and the sealing ring 3442 is located between the sealing groove 3441 and the inner wall of the reducer shaft cavity 331 in the radial direction R of the motor. If sealing effect between the first fastening structure 344 and the reducer shaft cavity 331 is poor, when flowing to the first fastening structure 344, the cooling oil may flow away from the spline 105 through a gap between the first fastening structure 344 and the reducer shaft cavity 331, resulting in damage to lubricating effect on the spline 105 and a waste of the cooling oil. Two ends of the sealing groove 3441 in the axial direction Y of the motor are fastened to the reducer shaft cavity 331 in the radial direction R of the motor. The first fastening structure 344, the sealing groove 3441, and the sealing ring 3442 are jointly configured to seal and fasten the oil through pipe 340 and the reducer input shaft 330, to prevent relative displacement between the oil through pipe 340 and the reducer input shaft 330, and prevent the cooling oil from flowing in a direction away from the spline 105. This increases utilization of the cooling oil.

In this embodiment of this application, a region enclosed by the reducer shaft cavity 331 is approximately a cylinder, and the sealing groove 3441 and the first fastening structure 344 surround the oil through pipe 340 one round in the circumferential direction C of the motor, to adapt to a structural feature of the reducer shaft cavity 331. This helps enhance sealing and fastening effect on the first fastening structure 344 and the reducer shaft cavity 331.

Still refer to FIG. 14 and FIG. 17. In an embodiment, the oil through pipe 340 includes a bearing lubricant hole 345 (as shown in FIG. 14 and FIG. 17). In the radial direction R of the motor, the bearing lubricant hole 345 penetrates the oil through pipe 340 (as shown in FIG. 14 and FIG. 17), and the bearing lubricant hole 345 and the inner wall of the reducer shaft cavity 331 are spaced from each other (as shown in FIG. 14 and FIG. 17). In the axial direction Y of the motor, the spline lubricant hole 342, the first fastening structure 344, and the bearing lubricant hole 345 are spaced from each other (as shown in FIG. 17).

In this embodiment of this application, the bearing lubricant hole 345 is configured to convey cooling oil to the reducer bearing 350, to lubricate the reducer bearing 350. The reducer bearing 350 is configured to bear the load from the reducer input shaft 330. If the reducer bearing 350 is not lubricated sufficiently, the reducer bearing 350 is easily ablated or damaged, and normal operation of the reducer 300 is interfered with. In the radial direction R of the motor, the bearing lubricant hole 345 penetrates the oil through pipe 340, and there is a gap between the bearing lubricant hole 345 and the inner wall of the reducer shaft cavity 331, so that the cooling oil in the oil through pipe 340 can flow to the gap between the bearing lubricant hole 345 and the inner wall of the reducer shaft cavity 331 through the bearing lubricant hole 345, to provide a basis for the cooling oil to flow to the reducer bearing 350. The cooling oil sequentially flows to the bearing lubricant hole 345 and the spline lubricant hole 342 in the oil through pipe 340. In the axial direction Y of the motor, the bearing lubricant hole 345, the first fastening structure 344, and the spline lubricant hole 342 are spaced from each other, to avoid interference between the cooling oil flowing to the reducer bearing 350 and the cooling oil flowing to the spline 105. This improves lubricating effect on the reducer bearing 350 and the spline 105.

Still refer to FIG. 14 and FIG. 17. In an embodiment, the oil-cooled powertrain 10 further includes a second fastening structure 346 (as shown in FIG. 14 and FIG. 17), and the second fastening structure 346 includes at least one bearing lubricant groove 3461 (as shown in FIG. 14 and FIG. 17). The bearing lubricant hole 345 communicates with the bearing lubricant groove 3461, and the oil through pipe 340 is fastened to the inner wall of the reducer shaft cavity 331 via the second fastening structure 346. In the radial direction R of the motor, the bearing lubricant groove 3461 is recessed toward the oil through pipe 340 from an outer circumferential surface of the second fastening structure 346 (as shown in FIG. 17). In the radial direction R of the motor, the oil through pipe 340, the second fastening structure 346, and the reducer input shaft 330 are sequentially arranged (as shown in FIG. 14 and FIG. 17). In the axial direction Y of the motor, the bearing lubricant groove 3461 penetrates the second fastening structure 346 (as shown in FIG. 17), and the spline lubricant hole 342, the first fastening structure 344, the bearing lubricant hole 345, and the second fastening structure 346 are spaced from each other (as shown in FIG. 14 and FIG. 17).

In this embodiment of this application, in the radial direction R of the motor, the second fastening structure 346 is located between the oil through pipe 340 and the reducer shaft cavity 331, the bearing lubricant groove 3461 is recessed toward the oil through pipe 340 in the radial direction R of the motor, and a part, other than the bearing lubricant groove 3461, of the outer circumferential surface of the second fastening structure 346 is used to fasten the oil through pipe 340 and the reducer shaft cavity 331. The bearing lubricant groove 3461 communicates with the bearing lubricant hole 345, and the bearing lubricant groove 3461 penetrates the second fastening structure 346 in the axial direction Y of the motor, so that the bearing lubricant groove 3461 plays a role in guiding a flow direction of cooling oil. Specifically, the cooling oil flows out from the bearing lubricant hole 345 to the gap between the oil through pipe 340 and the reducer shaft cavity 331, and then is guided to the reducer bearing 350 through the bearing lubricant groove 3461, to lubricate the reducer bearing 350.

In an embodiment, the second fastening structure 346 and the oil through pipe 340 are integrally formed. This solution can enhance stability of fastening the oil through pipe 340 and the reducer shaft cavity 331 in the radial direction of the motor, and helps the second fastening structure 346 stably guide a flow direction of the cooling oil.

Still refer to FIG. 12 and FIG. 14. In an embodiment, in the axial direction Y of the motor, a length of the oil through pipe 340 is less than a length of the reducer input shaft 330 (as shown in FIG. 12). Both a length of the first fastening structure 344 and a length of the second fastening structure 346 are less than a distance between the first fastening structure 344 and the second fastening structure 346 (as shown in FIG. 14).

In this embodiment of this application, in the axial direction Y of the motor, the length of the oil through pipe 340 is denoted as D8 (as shown in FIG. 12), the length of the reducer input shaft 330 is denoted as D9, the length of the first fastening structure 344 is denoted as D10 (as shown in FIG. 14), the length of the second fastening structure 346 is denoted as D11, and the distance between the first fastening structure 344 and the second fastening structure 346 is denoted as D12.

Both the oil through pipe 340 and a part of the motor shaft 140 are located in the reducer shaft cavity 331. Therefore, in this solution, D8<D9 is set (as shown in FIG. 12), to provide space for the reducer shaft cavity 331 to accommodate the part of the motor shaft 140. In addition, a size of the oil through pipe 340 in the axial direction Y of the motor is small. This helps reduce costs. The first fastening structure 344 and the second fastening structure 346 play a similar role in the reducer 300, and both are used to fasten the oil through pipe 340 and the reducer shaft cavity 331 and guide the flow direction of the cooling oil. Both the first fastening structure 344 and the second fastening structure 346 are in interference fit with the reducer shaft cavity 331 to implement mutual fastening. In this solution, D10<D12 and D11<D12 are set (as shown in FIG. 14), to reduce a difficulty in assembling the first fastening structure 344 and the second fastening structure 346 in the reducer shaft cavity 331. This helps reduce manufacturing costs. In addition, the length of the second fastening structure 346 in the axial direction Y of the motor is equivalent to a length of the bearing lubricant groove 3461 in the axial direction Y of the motor. Therefore, D11<D12 is set, to shorten a transmission path of the cooling oil in the bearing lubricant groove 3461. This helps reduce a transmission loss of the cooling oil between the bearing lubricant hole 345 and the reducer bearing 350.

Still refer to FIG. 14. In the axial direction Y of the motor, a distance between the first fastening structure 344 and the spline lubricant hole 342 is less than the distance between the first fastening structure 344 and the second fastening structure 346. In the axial direction Y of the motor, a distance between the first fastening structure 344 and the bearing lubricant hole 345 is greater than the distance between the first fastening structure 344 and the spline lubricant hole 342. In this embodiment of this application, in the axial direction Y of the motor, the distance between the first fastening structure 344 and the spline lubricant hole 342 is denoted as D13, and the distance between the first fastening structure 344 and the bearing lubricant hole 345 is denoted as D14. In this solution, D13<D12 and D13<D14 are set (as shown in FIG. 14), and the distance between the first fastening structure 344 and the spline lubricant hole 342 is small, to shorten a cooling path of the cooling oil between the spline lubricant hole 342 and the first fastening structure 344, thereby reducing a loss of the cooling oil. The distance between the first fastening structure 344 and the second fastening structure 346 and the distance between the first fastening structure 344 and the bearing lubricant hole 345 are large, to avoid mutual interference between the cooling oil flowing to the spline 105 and the cooling oil flowing to the reducer bearing 350. This helps improve lubricating effect on the spline 105 and the reducer bearing 350.

In an embodiment, a distance between the second fastening structure 346 and the bearing lubricant hole 345 is greater than the distance between the first fastening structure 344 and the spline lubricant hole 342. In this embodiment of this application, in the axial direction Y of the motor, the distance between the second fastening structure 346 and the bearing lubricant hole 345 is denoted as D15. In this solution, D13<D15 is set (as shown in FIG. 14), and the distance between the first fastening structure 344 and the spline lubricant hole 342 is small, to shorten the cooling path of the cooling oil between the spline lubricant hole 342 and the first fastening structure 344, thereby reducing the loss of the cooling oil.

Still refer to FIG. 17. In an embodiment, the second fastening structure 346 includes a plurality of bearing lubricant grooves 3461, and the plurality of bearing lubricant grooves 3461 are spaced from each other in the circumferential direction C of the motor. An aperture of the bearing lubricant hole 345 is less than a length of each of the bearing lubricant grooves 3461 in the axial direction Y of the motor, and the aperture of the bearing lubricant hole 345 is less than a length of each of the bearing lubricant grooves 3461 in the circumferential direction C of the motor.

In this embodiment of this application, the plurality of bearing lubricant grooves 3461 are spaced from each other on the second fastening structure 346 in the circumferential direction C of the motor, so that cooling oil can flow to the reducer bearing 350 from different positions through the plurality of bearing lubricant grooves 3461, to enhance lubricating effect on the reducer bearing 350. The aperture of the bearing lubricant hole 345 is less than the length of each bearing lubricant groove 3461 in the axial direction Y of the motor and the length of each bearing lubricant groove 3461 in the circumferential direction C of the motor, and the aperture of the bearing lubricant hole 345 is small, to avoid a through hole with an excessively large aperture in the oil through pipe 340. This improves structural strength of the oil through pipe 340, and helps limit a flow volume of the cooling oil flowing through the bearing lubricant hole 345. Therefore, the cooling oil in the oil through pipe 340 is mainly used to cool the reducer 300 and a heat emitting component in the motor 100. The lengths of the bearing lubricant groove 3461 in the axial direction Y of the motor and in the circumferential direction C of the motor are large, to ensure flow guide effect of the bearing lubricant hole 345 on the cooling oil. Therefore, the cooling oil flowing through the bearing lubricant hole 345 can be used to lubricate the reducer bearing 350.

Still refer to FIG. 14 and FIG. 16. In an embodiment, the reducer 300 includes reduction teeth 332 and the reducer bearing 350 (as shown in FIG. 14 and FIG. 16), the reduction teeth 332 are fastened to an outer circumferential surface of the reducer input shaft 330 in the radial direction R of the motor (as shown in FIG. 14 and FIG. 16), and the reducer bearing 350 sleeves the reducer input shaft 330 (as shown in FIG. 14). In the axial direction Y of the motor, the motor shaft 140, the reduction teeth 332, and the reducer bearing 350 are spaced from each other (as shown in FIG. 14). A projection of the bearing lubricant hole 345 in the radial direction R of the motor overlaps a part of a projection of the reduction teeth 332 in the radial direction R of the motor (as shown in FIG. 14). A projection of the second fastening structure 346 in the radial direction R of the motor partially overlaps a projection of the reducer bearing 350 in the radial direction R of the motor (as shown in FIG. 14).

In this embodiment of this application, the reduction teeth 332 are configured to be engaged with a gear component in the reducer 300 and drive the gear component to rotate (not shown in the figure). The gear component is configured to be in transmission connection to the wheel and drive the wheel to rotate (not shown in the figure).

In this embodiment of this application, the reducer bearing 350 sleeves the reducer input shaft 330, the reducer bearing 350 is configured to bear the load applied by the reducer input shaft 330, and the cooling oil can lubricate the reducer bearing 350 through the bearing lubricant hole 345. This helps prolong a service life of the reducer bearing 350. In the axial direction Y of the motor, the motor shaft 140, the reduction teeth 332, and the reducer bearing 350 are spaced from each other, to avoid mutual interference in a mechanical transmission process, and ensure normal operation of the reducer 300 and the motor 100. In the radial direction R of the motor, the projection of the bearing lubricant hole 345 overlaps the part of the projection of the reduction teeth 332, and the projection of the second fastening structure 346 in the radial direction R of the motor partially overlaps the projection of the reducer bearing 350 in the radial direction R of the motor. It indicates that the reducer bearing 350 and the reduction teeth 332 are adjacently disposed in the axial direction Y of the motor. In an embodiment, there is a gap in the reducer bearing 350, and the cooling oil flowing into the reducer bearing 350 flows to the reduction teeth 332 through the gap in the reducer bearing 350. The cooling oil sequentially lubricates the reducer bearing 350 and the reduction teeth 332, to ensure normal operation of the reducer 300.

A projection plane of the projection of the bearing lubricant hole 345 in the radial direction R of the motor is the same as a projection plane of the projection of the reduction teeth 332 in the radial direction R of the motor, and a projection plane of the projection of the second fastening structure 346 in the radial direction R of the motor is the same as a projection plane of the projection of the reducer bearing 350 in the radial direction R of the motor.

In an embodiment, the reducer end cover 310 further includes the reducer bearing chamber 315 (as shown in FIG. 14), and the reducer bearing chamber 315 is recessed in the first direction Y from the reducer end cover 310 to a direction away from the reducer input shaft 330, the reducer bearing 350 sleeves the reducer input shaft 330 and is located in the reducer bearing chamber 315, and the reducer bearing chamber 315 communicates with the bearing lubricant groove 3461. In this embodiment of this application, the cooling oil in the oil through pipe 340 sequentially flows through the bearing lubricant hole 345 and the bearing lubricant groove 3461, and then flows to the reducer bearing chamber 315 through a gap between the reducer input shaft 330 and the reducer end cover 310, to lubricate the reducer bearing 350. This avoids damage to the reducer bearing 350, prolongs a service life, and ensures long-term stable operation of the reducer 300. The reducer bearing chamber 315 can be further configured to temporarily store liquid, so that the reducer bearing 350 is better lubricated.

Still refer to FIG. 14. In an embodiment, the reducer input shaft 330 and the reducer end cover 310 are spaced from each other, and the oil through pipe 340, the oil guide member 312, and the blocking member 311 are spaced from each other. The reduction teeth 332, the reducer bearing 350, the oil guide member 312, and the blocking member 311 are spaced from each other in the axial direction Y of the motor.

In this embodiment of this application, the reducer input shaft 330 and the reducer end cover 310 are spaced from each other in the axial direction Y of the motor, to provide space for disposing the oil guide member 312 between the reducer end cover 310 and the reducer input shaft 330. The blocking member 311 and the oil guide member 312 are spaced from each other in the axial direction Y of the motor. This can effectively reduce an acting force and wear on the oil guide member 312, prolong a service life, and ensure flow guide effect of the oil guide member 312. The reduction teeth and the reducer bearing 350 are spaced from each other in the axial direction Y of the motor. This can avoid wear between the reduction teeth and the reducer bearing 350, and prolong a service life. The reduction teeth 332 and the reducer bearing 350 are spaced from the oil guide member 312 and the blocking member 311, so that assembly of the foregoing structure is not affected even if there is a design tolerance. This reduces a design difficulty and an assembly difficulty.

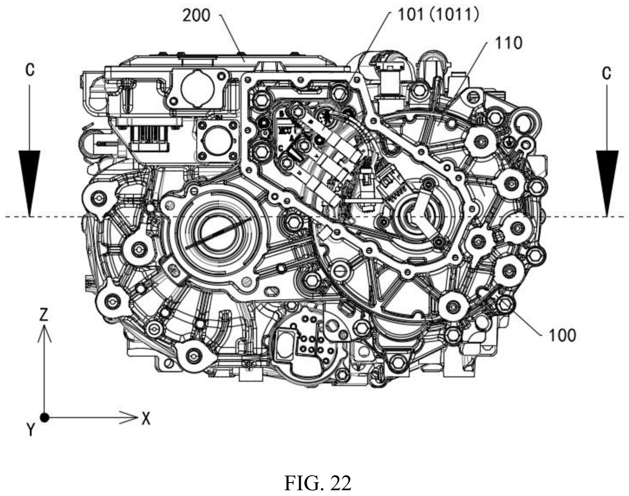

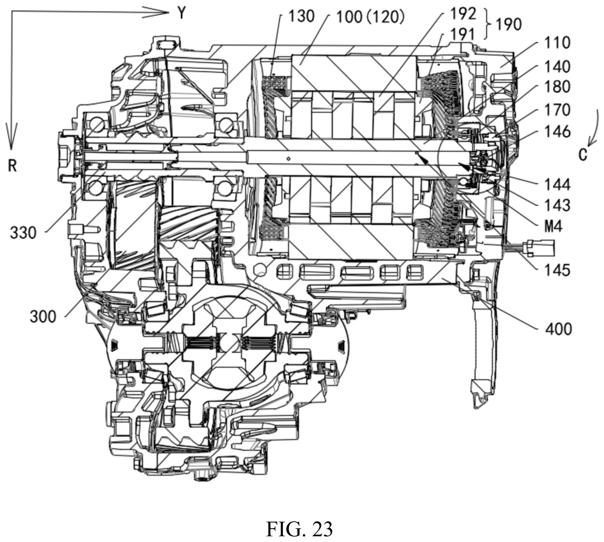

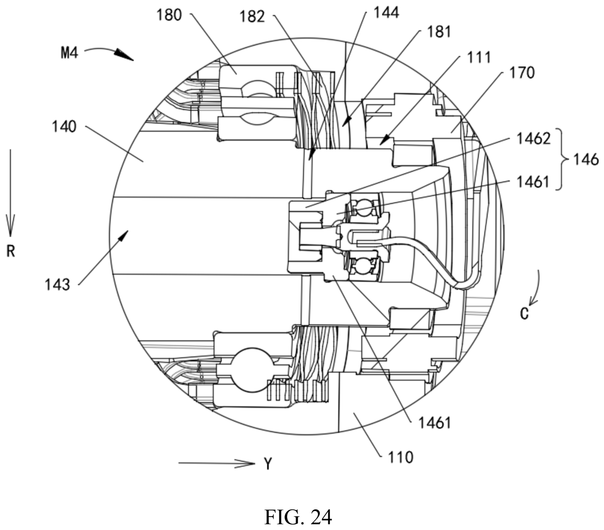

Refer to FIG. 22 to FIG. 24. FIG. 22 is a diagram of a structure of the oil-cooled powertrain 10 according to an embodiment of this application, FIG. 23 is a sectional view of the oil-cooled powertrain 10 shown in FIG. 22 along CC, and FIG. 24 is a partial enlarged view of a part M4 in the oil-cooled powertrain 10 shown in FIG. 23.

In an embodiment, the motor 100 includes a motor rotor 190 and a motor bearing 180 (as shown in FIG. 22 to FIG. 24), and the motor end cover 110 and the motor rotor 190 are spaced from each other in the axial direction Y of the motor (as shown in FIG. 23). The motor end cover 110 includes a motor shaft hole 111 (as shown in FIG. 24), the motor shaft hole 111 is configured to accommodate the motor bearing 180 and a part of the motor shaft 140 (as shown in FIG. 23 and FIG. 24), the motor bearing 180 sleeves the motor shaft 140 (as shown in FIG. 23 and FIG. 24), the motor shaft 140 is rotatably connected to the motor end cover 110 via the motor bearing 180, and the motor shaft 140 includes at least one motor bearing lubricant hole 144 (as shown in FIG. 24). In the axial direction Y of the motor, the motor shaft hole 111 penetrates the motor end cover 110. In the radial direction R of the motor, the motor bearing lubricant hole 144 penetrates the motor shaft 140 (as shown in FIG. 24). In the axial direction Y of the motor, the motor bearing lubricant hole 144, the motor bearing 180, and the motor rotor 190 are spaced from each other (as shown in FIG. 23 and FIG. 24).

In this embodiment of this application, the motor rotor 190 is fastened to the motor shaft 140 and is rotatably connected to the motor end cover 110, so that the motor shaft 140 rotates with the motor rotor 190 relative to the motor end cover 110. The motor stator 120 is rotatably connected to the motor shaft 140, so that the motor shaft 140 can rotate relative to the motor stator 120, to convert electric energy into mechanical energy. The output end of the motor shaft 140 is configured to transmit the mechanical energy. In this embodiment of this application, the motor winding 130 is a winding in the motor stator 120. In an embodiment, the motor winding 130 further includes a winding in the motor rotor, or the winding in the motor stator and the winding in the motor rotor.

In this embodiment of this application, the motor bearing 180 sleeves an outer side of the motor shaft 140, and space enclosed by an inner side of the motor shaft 140 forms the motor shaft cavity 143. The motor bearing 180 is configured to bear a load from the motor shaft 140, to reduce friction, and ensure that the motor 100 operates stably in a high-speed working condition. If the motor bearing 180 is not lubricated sufficiently, the motor bearing 180 may be ablated or damaged. In this embodiment of this application, the motor bearing lubricant hole 144 penetrates the motor shaft 140 in the radial direction R of the motor, and the motor bearing lubricant hole 144 communicates with the motor shaft cavity 143, so that the cooling oil in the motor shaft cavity 143 can be conveyed to the motor bearing 180 outside the motor shaft 140 through the motor bearing lubricant hole 144. In an embodiment, the motor bearing 180 includes a steel ball and a sleeve ring. The steel ball is movably disposed in the sleeve ring, and the cooling oil enters a gap between the steel ball and the sleeve ring through the motor bearing lubricant hole 144. This helps reduce wear between the steel ball and the sleeve ring, and further prolongs a service life of the motor bearing 180.

In an embodiment, the motor shaft cavity 143 communicates with the heat exchanger 500 in the vehicle through the reducer shaft cavity 331, the heat exchanger is configured to convey cooling oil to the motor shaft cavity 143, and the cooling oil enters the motor shaft cavity 143 through the oil through pipe 340 in the reducer shaft cavity 331. Because the heat exchanger 500 is disposed on a side that is of the motor rotor 190 and that is away from the motor bearing 180 in the axial direction Y of the motor, if the motor bearing lubricant hole 144 is not disposed in the motor shaft 140, a flow volume or a flow rate of the cooling oil in the motor 100 needs to be increased, to lubricate the motor bearing 180, and the motor bearing 180 is cooled and lubricated by the cooling oil on a side close to the motor rotor 190 in the axial direction Y of the motor. Because an amount of the cooling oil is increased, costs are increased, and it is difficult for the increased cooling oil to accurately flow to the motor bearing 180, resulting in poor lubricating effect. In this embodiment of this application, the through motor bearing lubricant hole 144 is disposed in the motor shaft 140, and the cooling oil can be conveyed from the motor shaft cavity 143 on the inner side of the motor shaft 140 to the motor bearing 180 on the outer side of the motor shaft 140 through the motor bearing lubricant hole 144, so that the motor bearing 180 can be effectively lubricated without increasing an amount of the cooling oil. This avoids ablation or damage of the motor bearing 180 due to insufficient lubrication, and ensures normal operation of the motor 100.

In this embodiment of this application, the cooling oil can be conveyed to the motor bearing 180 through the motor bearing lubricant hole 144, to effectively lubricate the motor bearing 180. This prolongs a service life of the motor bearing 180, and improves working performance of the motor 100. The amount of the cooling oil is small. This helps reduce costs. In addition, the cooling oil has both a cooling function and a lubricating function. This helps increase utilization of the cooling oil.

Still refer to FIG. 24. In an embodiment, the motor 100 further includes a bearing wave spring 182, the bearing wave spring 182 sleeves the motor shaft 140, and the bearing wave spring 182 has a gap, and the gap of the bearing wave spring 182 is configured to communicate the motor bearing lubricant hole 144 and the motor bearing 180. The bearing wave spring 182, the motor bearing 180, and the motor rotor 190 are arranged in the axial direction Y of the motor, and the bearing wave spring 182 is adjacent to the motor bearing 180. A projection of the motor bearing lubricant hole 144 in the radial direction R of the motor is located in a projection of the bearing wave spring 182 in the radial direction R of the motor.

In this embodiment of this application, the bearing wave spring 182 is a wave washer, and the motor bearing 180 and the bearing wave spring 182 are arranged in the axial direction Y of the motor, so that the bearing wave spring 182 can bear an axial force from the motor bearing 180 and eliminate noise and vibration, thereby improving motor performance. The bearing wave spring 182 has the gap. In the radial direction R of the motor, a projection of the motor bearing lubricant hole 144 is located in the projection of the bearing wave spring 182, so that the cooling oil in the motor shaft cavity 143 flows out of the motor bearing lubricant hole 144, and then sequentially flows to the gap of the bearing wave spring 182 and the motor bearing 180. The projection of the motor bearing lubricant hole 144 is a projection of a region enclosed by the motor bearing lubricant hole 144. The bearing wave spring 182 is disposed close to the motor bearing 180 in the axial direction Y of the motor. This helps shorten a transmission path of the cooling oil between the motor bearing lubricant hole 144 and the motor bearing 180, and reduces a loss.

Still refer to FIG. 24. In an embodiment, the motor shaft 140 includes a plurality of motor bearing lubricant holes 144, and the plurality of motor bearing lubricant holes 144 are spaced from each other in the circumferential direction C of the motor. An aperture of each motor bearing lubricant hole 144 in the axial direction Y of the motor is less than a length of the bearing wave spring 182 in the axial direction Y of the motor. In the circumferential direction C of the motor, an aperture of each motor bearing lubricant hole 144 is less than a spacing between two adjacent motor bearing lubricant holes 144.

In this embodiment of this application, the plurality of motor bearing lubricant holes 144 are spaced from each other in the motor shaft 140, so that the cooling oil conveyed to the motor bearing 180 is increased, and different parts of the motor bearing 180 can be lubricated, to avoid insufficient local lubrication of the motor bearing 180. For example, a quantity of motor bearing lubricant holes 144 may be 2, 3, 4, or another positive integer greater than 1. In the axial direction Y of the motor, the aperture of the motor bearing lubricant hole 144 is less than the length of the bearing wave spring 182, to ensure that the cooling oil flowing through the motor bearing lubricant hole 144 can flow into the gap of the bearing wave spring 182, thereby increasing utilization of the cooling oil. In the circumferential direction C of the motor, the aperture of the motor bearing lubricant hole 144 is less than the spacing between two adjacent motor bearing lubricant holes 144, and the aperture of the motor bearing lubricant hole 144 is set to a small range, to avoid an excessively large through hole disposed in the motor shaft 140. This improves structural strength of the motor shaft 140. Setting the spacing between two adjacent motor bearing lubricant holes 144 to a large range is equivalent to limiting the quantity of motor bearing lubricant holes 144. This can prevent excessive cooling oil from flowing out of the motor shaft cavity 143 from the motor bearing lubricant holes 144, and ensures cooling and lubricating effect of the cooling oil on another component in the motor 100.

In an embodiment, the plurality of motor bearing lubricant holes 144 are evenly spaced from each other in the circumferential direction C of the motor. This solution helps ensure dynamic balance performance of the motor shaft 140.

Still refer to FIG. 23 and FIG. 24. In an embodiment, the motor 100 further includes a rotary sensor stator 170. Both the rotary sensor stator 170 and the motor bearing 180 sleeve the motor shaft 140 and located in the motor shaft hole 111 (as shown in FIG. 23 and FIG. 24). The rotary sensor stator 170, the motor bearing 180, and the motor stator 120 are arranged in the axial direction of the motor shaft 140 (as shown in FIG. 23 and FIG. 24). The rotary sensor stator 170, the motor shaft 140, the motor bearing 180, and a hole wall of the motor shaft hole 111 form a motor bearing chamber 181 through enclosing (as shown in FIG. 24), and the motor bearing lubricant hole communicates with the motor bearing chamber 181 (as shown in FIG. 24).

In this embodiment of this application, the motor bearing 180 and the bearing wave spring are located in the motor bearing chamber 181, and the motor bearing lubricant hole communicates with the motor bearing chamber 181. The cooling oil can enter the motor bearing chamber 181 through the motor bearing lubricant hole, and is in contact with the motor bearing 180, to lubricate the motor bearing 180. This avoids damage to the motor bearing 180, prolongs a service life, and ensures long-term stable operation of the motor 100. The motor bearing chamber 181 can be further configured to temporarily store liquid, so that the motor bearing 180 is better lubricated.

Still refer to FIG. 23 and FIG. 24. In an embodiment, the motor shaft 140 further includes at least one rotor shunting hole 145 (as shown in FIG. 23). The rotor shunting hole 145 penetrates the motor shaft 140 in the radial direction R of the motor, and a projection of the rotor shunting hole 145 and a projection of the motor rotor 190 at least partially overlap (as shown in FIG. 23). In the axial direction Y of the motor, the motor bearing lubricant hole 144, the motor bearing 180, and the rotor shunting hole 145 are spaced from each other (as shown in FIG. 23 and FIG. 24). An aperture of the rotor shunting hole 145 is greater than the aperture of the motor bearing lubricant hole 144 (as shown in FIG. 23 and FIG. 24).

In this embodiment of this application, the motor rotor 190 sleeves outside the motor shaft 140, the rotor shunting hole 145 penetrates the motor shaft 140 in the radial direction R of the motor, and the rotor shunting hole 145 communicates with the motor shaft cavity 143. In the radial direction R of the motor, the projection of the rotor shunting hole 145 and the projection of the motor rotor 190 at least partially overlap, so that the cooling oil in the motor shaft cavity 143 can be conveyed to the motor rotor 190 outside the motor shaft 140 through the rotor shunting hole 145, to cool the motor rotor 190. The projection of the rotor shunting hole 145 in the radial direction R of the motor is a projection of a region, enclosed by the rotor shunting hole 145, in the radial direction R of the motor. When the motor 100 operates at a high speed, the motor rotor 190 generates a large amount of heat, and the motor rotor 190 needs to be cooled. In this solution, both the motor bearing lubricant hole 144 and the rotor shunting hole 145 are disposed in the motor shaft 140, and the aperture of the rotor shunting hole 145 is greater than the aperture of the motor bearing lubricant hole 144, so that when the motor 100 is in a high-speed working condition, the cooling oil cools the motor rotor 190 mainly through the rotor shunting hole 145, or when the motor 100 is in a low-speed working condition, a part of the cooling oil can lubricate the motor bearing 180 through the motor bearing lubricant hole 144, to meet cooling and lubricating requirements of the motor 100 in different cases. This improves working performance of the motor 100.

Still refer to FIG. 23. In an embodiment, the motor rotor 190 includes rotor end plates 191 and a rotor core 192. Both the rotor end plates 191 and the rotor core 192 sleeve the motor shaft 140, in the axial direction Y of the motor, the rotor end plates 191 are arranged on two sides of the rotor core 192, and the rotor end plate 191 includes an end plate shaft hole (not shown in the figure) that penetrates the rotor end plate 191 in the axial direction Y of the motor. A rotor oil channel is disposed in the rotor core 192, the end plate shaft hole is configured to communicate the rotor oil channel and the rotor shunting hole 145, and a projection of the end plate shaft hole in the radial direction R of the motor covers the projection of the rotor shunting hole 145 in the radial direction R of the motor. In an embodiment, the end plate shaft hole is further configured to adjust dynamic balance of the motor rotor 190, and the rotor end plate 191 may also be referred to as a dynamic balance end plate. In an embodiment, the rotor end plate 191 is configured to axially position the rotor core 192.

Still refer to FIG. 23 and FIG. 24. In an embodiment, the motor shaft 140 includes the plurality of motor bearing lubricant holes 144 and a plurality of rotor shunting holes 145 (as shown in FIG. 23 and FIG. 24). The plurality of motor bearing lubricant holes 144 are spaced from each other in the circumferential direction C of the motor (as shown in FIG. 24). A total length of apertures of the plurality of motor bearing lubricant holes 144 is less than a total length of apertures of the plurality of rotor shunting holes 145 (as shown in FIG. 23 and FIG. 24).

In this embodiment of this application, the plurality of rotor shunting holes 145 are disposed in the motor shaft 140, so that the cooling oil conveyed to the motor rotor 190 is increased, and different parts of the motor rotor 190 can be cooled, to avoid local overheating of the motor rotor 190. The total length of the apertures of the plurality of motor bearing lubricant holes 144 is set to be less than the total length of the apertures of the plurality of rotor shunting holes 145, so that the cooling oil can be properly allocated, to avoid insufficient cooling of the motor rotor 190 caused by excessive cooling oil used to lubricate the motor bearing 180.

In an embodiment, a ratio of the aperture of each rotor shunting hole 145 to the aperture of each motor bearing lubricant hole 144 is greater than or equal to 2 and less than or equal to 4.

In this embodiment of this application, the aperture of the rotor shunting hole 145 and the aperture of the motor bearing lubricant hole 144 are set to a range greater than or equal to 2 and less than or equal to 4, so that more cooling oil can flow out through the rotor shunting hole 145, and when the motor 100 is in the high-speed working condition, the cooling oil cools the motor rotor 190 mainly through the rotor shunting hole 145, or when the motor 100 is in the low-speed working condition, a small part of the cooling oil may lubricate the motor bearing 180 through the motor bearing lubricant hole 144.

Still refer to FIG. 24. In an embodiment, the motor 100 further includes a shaft hole blocking member 146. The shaft hole blocking member 146 includes a radial sealing part 1461 and a lubricant circulation part 1462. In the radial direction R of the motor, the radial sealing part 1461 is configured to be sealed with and fastened to an inner wall of the motor shaft cavity 143. The radial sealing part 1461, the lubricant circulation part 1462, and the rotor shunting hole 145 are arranged in the axial direction Y of the motor, and the lubricant circulation part 1462 is fastened to the radial sealing part 1461. In the radial direction R of the motor, the lubricant circulation part 1462 is spaced from the inner wall of the motor shaft cavity 143, and the projection of the motor bearing lubricant hole 144 in the radial direction R of the motor is located in a projection of the lubricant circulation part 1462 in the radial direction R of the motor.

In this embodiment of this application, the shaft hole blocking member 146 includes the radial sealing part 1461 and the lubricant circulation part 1462 that are fastened to each other. In the axial direction Y of the motor, the radial sealing part 1461 is located on a side that is of the lubricant circulation part 1462 and that is away from the rotor shunting hole 145. The radial sealing part 1461 is sealed with and fastened to the inner wall of the motor shaft cavity 143, to avoid a case in which the cooling oil flows out of the motor shaft cavity 143 in the axial direction Y of the motor instead of flowing to the motor bearing lubricant hole 144. There is a gap between the lubricant circulation part 1462 and the inner wall of the motor shaft cavity 143 in the radial direction R of the motor, and the projection of the lubricant circulation part 1462 in the radial direction R of the motor covers the projection of the motor bearing lubricant hole 144 in the radial direction R of the motor, so that when flowing through the shaft hole blocking member 146, the cooling oil in the motor shaft cavity 143 can flow to the motor bearing lubricant hole 144 through the gap between the lubricant circulation part 1462 and the inner wall of the motor shaft cavity 143. In this embodiment of this application, the shaft hole blocking member 146 is disposed in the motor shaft cavity 143, so that flow resistance of the cooling oil flowing to the motor bearing lubricant hole 144 can be increased, and an aperture of the motor shaft 140 corresponding to the motor bearing lubricant hole 144 in the radial direction R of the motor is reduced, to control a flow volume of the cooling oil used to lubricate the motor bearing 180, and prevent the cooling oil in the motor shaft cavity 143 from directly flowing out of the motor shaft cavity 143 in the axial direction Y of the motor. In addition, the shaft hole blocking member 146 can further prevent a foreign matter from entering the motor shaft cavity 143.

In an embodiment, the radial sealing part 1461 and the lubricant circulation part 1462 are integrally formed. This solution helps enhance structural strength of the shaft hole blocking member 146.

Still refer to FIG. 23 and FIG. 24. In an embodiment, in the radial direction R of the motor, a distance between the lubricant circulation part 1462 and the inner wall of the motor shaft cavity 143 is less than the aperture of the motor bearing lubricant hole 144 (as shown in FIG. 24). The distance between the lubricant circulation part 1462 and the inner wall of the motor shaft cavity 143 is less than the aperture of the rotor shunting hole 145 (as shown in FIG. 23 and FIG. 24). The length of the lubricant circulation part 1462 in the axial direction Y of the motor is greater than the aperture of the motor bearing lubricant hole 144 (as shown in FIG. 24).

In this embodiment of this application, the lubricant circulation part 1462 and the inner wall of the motor shaft cavity 143 are spaced from each other in the radial direction R of the motor, and the gap between the lubricant circulation part 1462 and the inner wall of the motor shaft cavity 143 in the radial direction R of the motor is less than the aperture of the motor bearing lubricant hole 144 and the aperture of the rotor shunting hole 145, so that the lubricant circulation part 1462 performs flow limiting on the cooling oil flowing to the motor bearing 180, to prevent excessive cooling oil from flowing through the motor bearing lubricant hole 144. The length of the lubricant circulation part 1462 in the axial direction Y of the motor is set to be greater than the aperture of the motor bearing lubricant hole 144, so that the cooling oil first fully fills the gap between the lubricant circulation part 1462 and the inner wall of the motor shaft cavity 143 before flowing to the motor bearing lubricant hole 144, and then flows into the motor bearing lubricant hole 144.

Still refer to FIG. 23 and FIG. 24. In an embodiment, in the axial direction Y of the motor, a distance between the rotor shunting hole 145 and the lubricant circulation part 1462 is greater than a length of the lubricant circulation part 1462 (as shown in FIG. 23 and FIG. 24). The distance between the rotor shunting hole 145 and the lubricant circulation part 1462 is greater than a distance between the lubricant circulation part 1462 and the motor bearing 180 (as shown in FIG. 23 and FIG. 24).

In this embodiment of this application, the length of the lubricant circulation part 1462 in the axial direction Y of the motor is set to be small, to avoid an excessively large size occupied by the lubricant circulation part 1462 in the axial direction Y of the motor. If the length of the lubricant circulation part 1462 is greater than the distance between the rotor shunting hole 145 and the lubricant circulation part 1462, it is difficult for the cooling oil to flow into the motor bearing lubricant hole 144 in either the high-speed working condition or the low-speed working condition, and lubrication of the motor bearing 180 is affected. The distance between the lubricant circulation part 1462 and the motor bearing 180 in the axial direction Y of the motor is set to be small, to shorten a transmission path of the cooling oil between the lubricant circulation part 1462 and the motor bearing 180. This helps reduce a loss of the cooling oil on the transmission path.

The motor, the oil-cooled powertrain and the electric vehicle provided in embodiments of this application are described in detail above. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. An oil-cooled powertrain, comprising a reducer, a motor, and an oil through pipe, wherein the reducer comprises a reducer input shaft, the motor comprises a motor shaft, the reducer input shaft is fastened to the motor shaft, the reducer input shaft comprises a reducer shaft cavity, the reducer shaft cavity is configured to accommodate the oil through pipe and a part of the motor shaft, the oil through pipe and the reducer input shaft are oppositely fastened, and the motor shaft comprises a motor shaft cavity;
in an axial direction of the motor, the reducer shaft cavity penetrates the reducer input shaft, and the motor shaft cavity penetrates the motor shaft; and
the oil through pipe and the motor shaft are arranged in the axial direction of the motor, and the oil through pipe communicates with the motor shaft cavity.

2. The oil-cooled powertrain according to claim 1, wherein the motor shaft is fastened to the reducer input shaft via a spline in a radial direction of the motor, and the oil through pipe comprises at least one spline lubricant hole;
the motor shaft cavity is configured to accommodate a part of the oil through pipe, and in the radial direction of the motor, projections of the oil through pipe, the motor shaft, and the reducer input shaft partially overlap; and
the spline lubricant hole penetrates the oil through pipe in the radial direction of the motor, and in the radial direction of the motor, projections of the spline lubricant hole, the motor shaft, and the reducer input shaft partially overlap.

3. The oil-cooled powertrain according to claim 2, wherein the oil through pipe comprises at least one spline oil guide groove, and the spline oil guide groove communicates with the spline lubricant hole;
in the radial direction of the motor, the spline oil guide groove is recessed away from the reducer input shaft from an outer circumferential surface of the oil through pipe;
in the axial direction of the motor, the spline lubricant hole communicates with an end face of the oil through pipe;
in the radial direction of the motor, projections of the spline oil guide groove, the motor shaft, and the reducer input shaft partially overlap; and
the spline, the spline lubricant hole, and the spline oil guide groove are arranged in the axial direction of the motor, and the spline lubricant hole and the spline oil guide groove are adjacent in the axial direction of the motor.

4. The oil-cooled powertrain according to claim 3, wherein the oil through pipe comprises a plurality of spline lubricant holes and a plurality of spline oil guide grooves, and each of the spline lubricant holes is adjacent to and communicates with one of the spline oil guide grooves in the axial direction of the motor;
the plurality of spline lubricant holes are spaced from each other in a circumferential direction of the motor, and the plurality of spline oil guide grooves are spaced from each other in the circumferential direction of the motor;
in the axial direction of the motor, an aperture of the spline lubricant hole is less than a length of the spline oil guide groove; and
in the circumferential direction of the motor, an aperture of the spline lubricant hole is less than a width of the spline oil guide groove.

5. The oil-cooled powertrain according to claim 3, wherein the oil-cooled powertrain further comprises a first fastening structure, and the oil through pipe is sealed with and fastened to an inner wall of the reducer shaft cavity via the first fastening structure;
in the radial direction of the motor, the oil through pipe, the first fastening structure, and the reducer are sequentially arranged;
in the axial direction of the motor shaft, the motor shaft and the first fastening structure are spaced from each other, the spline and the first fastening structure are spaced from each other, and a distance between the motor shaft and the first fastening structure is less than a distance between the spline and the first fastening structure; and
the spline lubricant hole, the spline oil guide groove, and the first fastening structure are arranged in the axial direction of the motor.

6. The oil-cooled powertrain according to claim 5, wherein the first fastening structure comprises a sealing groove, the sealing groove is configured to accommodate a sealing ring, and the first fastening structure is sealed with and fastened to the reducer input shaft via the sealing ring;
in the radial direction of the motor, the sealing groove is recessed away from the reducer input shaft from an outer circumferential surface of the first fastening structure; and
in a circumferential direction of the motor, both the sealing groove and the first fastening structure surround the oil through pipe one round.

7. The oil-cooled powertrain according to claim 5, wherein the oil through pipe comprises a bearing lubricant hole;
in the radial direction of the motor, the bearing lubricant hole penetrates the oil through pipe, and the bearing lubricant hole and the inner wall of the reducer shaft cavity are spaced from each other; and
in the axial direction of the motor, the spline lubricant hole, the first fastening structure, and the bearing lubricant hole are spaced from each other.

8. The oil-cooled powertrain according to claim 7, wherein the oil-cooled powertrain further comprises a second fastening structure, the second fastening structure comprises at least one bearing lubricant groove, the bearing lubricant hole communicates with the bearing lubricant groove, and the oil through pipe is fastened to the inner wall of the reducer shaft cavity via the second fastening structure;
in the radial direction of the motor, the bearing lubricant groove is recessed toward the oil through pipe from an outer circumferential surface of the second fastening structure;
in the radial direction of the motor, the oil through pipe, the second fastening structure, and the reducer input shaft are sequentially arranged; and
in the axial direction of the motor, the bearing lubricant groove penetrates the second fastening structure, and the spline lubricant hole, the first fastening structure, the bearing lubricant hole, and the second fastening structure are spaced from each other.

9. The oil-cooled powertrain according to claim 8, wherein in the axial direction of the motor, a length of the oil through pipe is less than a length of the reducer input shaft, and both a length of the first fastening structure and a length of the second fastening structure are less than a distance between the first fastening structure and the second fastening structure;
in the axial direction of the motor, a distance between the first fastening structure and the spline lubricant hole is less than the distance between the first fastening structure and the second fastening structure; and
in the axial direction of the motor, a distance between the bearing lubricant hole and at least one of the first fastening structure and the second fastening structure is greater than the distance between the first fastening structure and the spline lubricant hole.

10. The oil-cooled powertrain according to claim 8, wherein the second fastening structure comprises a plurality of bearing lubricant grooves, and the plurality of bearing lubricant grooves are spaced from each other in a circumferential direction of the motor; and
an aperture of the bearing lubricant hole is less than a length of each of the bearing lubricant grooves in the axial direction of the motor, and the aperture of the bearing lubricant hole is less than a length of each of the bearing lubricant grooves in the circumferential direction of the motor.

11. The oil-cooled powertrain according to claim 8, wherein the reducer comprises reduction teeth and a reducer bearing, the reduction teeth are fastened to an outer circumferential surface of the reducer input shaft in the radial direction of the motor, and the reducer bearing sleeves the reducer input shaft;
in the axial direction of the motor, the motor shaft, the reduction teeth, and the reducer bearing are spaced from each other;
a projection of the bearing lubricant hole in the radial direction of the motor overlaps a part of a projection of the reduction teeth in the radial direction of the motor; and
a projection of the second fastening structure in the radial direction of the motor partially overlaps a projection of the reducer bearing in the radial direction of the motor.

12. The oil-cooled powertrain according to claim 10, wherein the oil-cooled powertrain further comprises a reducer end cover, the reducer input shaft is rotatably connected to the reducer end cover via a reducer bearing, the reducer end cover, the reducer input shaft, and the motor shaft are arranged in the axial direction of the motor, the reducer end cover comprises a blocking member, an oil guide member, and a fastening hole, the fastening hole penetrates the reducer end cover in the axial direction of the motor, the blocking member and the oil guide member are located in the fastening hole, and the oil guide member is configured to communicate the reducer input shaft and the oil through pipe;
in the axial direction of the motor, the reducer input shaft and the reducer end cover are spaced from each other, and the oil through pipe, the oil guide member, and the blocking member are spaced from each other; and
in the axial direction of the motor, reduction teeth, the reducer bearing, the oil guide member, and the blocking member are spaced from each other.

13. The oil-cooled powertrain according to claim 12, wherein the oil-cooled powertrain comprises an integrated housing, the integrated housing comprises a reducer accommodating cavity and a motor accommodating cavity, the motor accommodating cavity is configured to accommodate the motor, the reducer accommodating cavity is configured to accommodate the reducer, in a first direction, the motor accommodating cavity penetrates the integrated housing and communicates with the reducer accommodating cavity, the first direction is parallel to the axial direction of the motor, the motor end cover and the reducer end cover are respectively arranged on two sides of the motor in the first direction, the oil through pipe and the reducer are located in the reducer accommodating cavity, the oil through pipe communicates with the reducer accommodating cavity, and the motor shaft cavity communicates with the motor accommodating cavity.

14. The oil-cooled powertrain according to claim 13, wherein the integrated housing comprises a control unit accommodating cavity, a direct current input interface mounting hole, and an alternating current output interface mounting hole, the control unit accommodating cavity is configured to accommodate a motor control unit, the control unit accommodating cavity and the motor accommodating cavity are arranged in a second direction, and the second direction is perpendicular to the first direction; and
in the first direction, the direct current input interface mounting hole and the alternating current output interface mounting hole separately penetrate the integrated housing and communicate with the control unit accommodating cavity, the direct current input interface mounting hole and the alternating current output interface mounting hole are oppositely arranged, and a spacing between the direct current input interface mounting hole and any one of the oil through pipe, the oil guide member, and the blocking member is less than a spacing between the alternating current output interface mounting hole and any one of the oil through pipe, the oil guide member, and the blocking member.

15. An electric vehicle, comprising a vehicle body, wheels, and the oil-cooled powertrain according to any one of claims 1 to 14, wherein the oil-cooled powertrain is configured to drive the wheel, the vehicle body is configured to fasten the oil-cooled powertrain, a heat exchanger in the oil-cooled powertrain is configured to exchange heat with a cooling system in the electric vehicle, and the heat exchanger is configured to communicate an oil through pipe, a reducer shaft cavity, a reducer accommodating cavity, a motor shaft cavity, and a motor accommodating cavity that are in the oil-cooled powertrain.
